# EUROPEAN PATENT APPLICATION

(11) **EP 4 801 168 A1**
(43) Date of publication of application: **02.09.2026**
(21) Application number: 24890610.9
(22) Date of filing: 11.11.2024
(51) Int. Cl.: H04W 72/23

(54) **COMMUNICATION METHOD AND COMMUNICATION APPARATUS**

(30) Priority: 17.11.2023 CN 202311551526
(71) Applicant: Huawei Technologies Co., Ltd., Shenzhen, Guangdong 518129 (CN)
(72) Inventor: GAO, Na, Shenzhen, Guangdong 518129 (CN); TANG, Hao, Shenzhen, Guangdong 518129 (CN); WEI, Dongdong, Shenzhen, Guangdong 518129 (CN); MA, Jianglei, Shenzhen, Guangdong 518129 (CN)
(74) Representative: Goddar, Heinz J.
(86) International application number: PCT/CN2024/131249
(87) International publication number: WO 2025/103254

(57) **Abstract**

This application provides a communication method and a communication apparatus, applied to service scenarios with low-latency and high-reliability requirements, and in particular, to URLLC scenarios. The method includes: sending first indication information, where the first indication information indicates at least one subband full duplex SBFD time period, the time period includes at least two types of SBFD time units, each type of SBFD time unit includes an uplink subband and a downlink subband, and different types of SBFD time units have different subband configurations; and independently configuring a control resource set CORESET resource for each type of SBFD time unit among the at least two types of SBFD time units. Solutions of this application can support a requirement of transmitting downlink control information at any time in service scenarios, so that latency can be reduced and communication performance is improved.

## Description

This application claims priority to Chinese Patent Application No. 202311551526.4, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

In 5G communication systems, low-latency and high-reliability application scenarios attract significant attention. For example, ultra-reliable low latency communication (ultra-reliable low latency communication, URLLC) scenarios feature low latency and high reliability, which are crucial to wide application in the fields such as autonomous driving, industrial manufacturing, an internet of vehicles, and smart grid. In semi-static subband full duplex (subband full duplex, SBFD) UL subbands, uplink frequency domain resources account for approximately 20% to 25% of bandwidth. In dynamic SBFD, an uplink-downlink configuration ratio is more flexible. Base stations can flexibly configure uplink and downlink transmission based on uplink and downlink traffic. For example, when uplink service traffic is heavy, more uplink transmission is configured. Compared with dynamic time division duplex (time division duplexing, TDD), dynamic SBFD allows uplink (uplink, UL) transmission at any time and has lower latency. However, semi-static SBFD and dynamic SBFD still cannot meet the low-latency requirements in the URLLC scenarios. Therefore, resource configuration schemes that support service scenarios with low-latency and high-reliability requirements still need to be improved.

### SUMMARY

This application provides a communication method and a communication apparatus, to support a requirement of transmitting downlink control information at any time in a service scenario, so that latency can be reduced, to improve communication performance.

According to a first aspect, a communication method is provided. The method may be performed by a network device, or may be performed by a chip or a circuit of the network device. This is not limited in this application. For ease of description, an example in which the method is performed by the network device is used below for description.

The method includes: sending first indication information, where the first indication information indicates at least one SBFD time period, the SBFD time period includes at least two types of SBFD time units, each type of SBFD time unit includes an uplink subband and a downlink subband, and different types of SBFD time units have different subband configurations; and independently configuring a control resource set CORESET resource for each type of SBFD time unit among the at least two types of SBFD time units.

It should be understood that the SBFD time period indicates a period of time occupied by an SBFD resource in time domain. For example, the SBFD time period may be a slot, a mini-slot, a symbol, a frame structure, a subframe, or a time period related to a subcarrier spacing. A time unit is a unit time included in a time period. For example, the time unit may be a symbol, for example, an orthogonal frequency division multiplexing symbol (OS). For example, one SBFD slot may include a plurality of types of SBFD OSs. Specific names of the time period and the time unit are not limited in embodiments of this application.

It should be understood that the time period related to the subcarrier spacing may be understood as that a quantity of symbols included in the time period is related to the subcarrier spacing.

It should be understood that each type of SBFD time unit includes an uplink subband and a downlink subband. The uplink subband and the downlink subband may not overlap, or may partially overlap.

In addition, independently configuring the CORESET resource means that configuration processes of different types of time units are independent of each other, or configuration is performed separately for different types of time units. CORESET resources configured for all types of SBFD time units may be the same or may be different. For ease of description, in this embodiment of this application, an example in which the SBFD time period is a slot and the SBFD time unit is an SBFD OS is used for description. However, this embodiment of this application is also applicable to a time period and a time unit of other names.

According to the foregoing solution, the indicated SBFD time period includes the at least two types of SBFD time units, and each type of SBFD time unit includes the uplink subband and the downlink subband. The CORESET resource is independently configured for each type of SBFD time unit in the different types of SBFD time units. In this way, each SBFD time unit has a downlink resource. This can ensure that user equipment can receive downlink information at any time, for example, downlink transmission data and downlink control information, and ensure that a CORESET resource configuration can support a flexibly changing downlink resource, so that latency can be reduced, to improve communication performance.

With reference to the first aspect, in some implementations of the first aspect, the method further includes: sending second indication information, where the second indication information indicates a correspondence between the SBFD time unit and the CORESET resource.

For example, the correspondence between the SBFD time unit and the CORESET resource includes: The correspondence is predefined in a protocol, or higher layer signaling or physical layer signaling indicates the correspondence.

With reference to the first aspect, in some implementations of the first aspect, the sending the second indication information further includes: sending higher layer signaling or physical layer signaling, where the higher layer signaling or the physical layer signaling carries the second indication information.

For example, the correspondence between the SBFD time unit and the CORESET resource may be explicitly indicated. Specifically, different CORESET resources are configured for the different types of SBFD time units, and a terminal device receives the second indication information, and determines, based on the second indication information, the CORESET resource corresponding to the SBFD time unit. The higher layer signaling or the physical layer signaling indicates the CORESET resources corresponding to the different types of SBFD time units, and the higher layer signaling or the physical layer signaling carries the second indication information. The second indication information may be separately configured or separately indicated, or may be carried in configuration information that is of the CORESET resource and that is configured in the higher layer signaling.

Optionally, the correspondence between the SBFD time unit and the CORESET resource may alternatively be implicitly indicated. Specifically, a plurality of CORESET resources are configured in the higher layer signaling. A frequency domain resource, a time domain resource, a granularity parameter of a control channel element (CCE), a parameter of a demodulation reference signal (DMRS) resource, or the like in each CORESET resource implicitly indicates the correspondence between the SBFD time unit and the CORESET resource.

According to the foregoing solution, the terminal device may obtain, based on the correspondence between the SBFD time unit and the CORESET resource, the CORESET resources corresponding to the different types of SBFD time units. In other words, the CORESET resources are independently configured for the different types of SBFD time units, to ensure that a CORESET resource configuration can support a flexibly changing downlink resource. In particular, in comparison with a manner in which CORESET resources are uniformly configured for different types of SBFD time units by using RRC signaling, in this embodiment of this application, control information can be received at any time, to reduce latency, so as to improve communication performance.

With reference to the first aspect, in some implementations of the first aspect, that the different types of SBFD time units have the different subband configurations includes one or more of the following:
the uplink subbands have different frequency domain sizes and/or different frequency domain positions; or the downlink subbands have different frequency domain sizes and/or different frequency domain positions.

For example, each type of SBFD OS has a different uplink subband configuration and a different downlink subband configuration. For example, an SBFD OS 1 type includes two downlink subbands and one uplink subband, where each downlink subband occupies 50 resource blocks (resource blocks, RBs) and the uplink subband occupies 10 RBs, and an SBFD OS 2 type includes one downlink subband and two uplink subbands, where the downlink subband occupies 10 RBs and each uplink subband occupies 100 RBs. A type of an SBFD OS included in each SBFD time period is determined by a frequency domain position or a frequency domain size of a downlink subband or an uplink subband.

According to the foregoing solution, the different types of SBFD time units have different uplink subband configurations and different downlink subband configurations. For example, the downlink subbands have different frequency domain sizes and/or different frequency domain positions. In this way, each SBFD time unit has a downlink resource, and subband configurations are diversified, so that the network device can dynamically adjust a subband configuration based on traffic of user equipment and a latency requirement of the user equipment, to reduce latency, so as to improve communication performance.

With reference to the first aspect, in some implementations of the first aspect, the at least two types of SBFD time units are predefined in a protocol, and definition information of each type of SBFD time unit includes one or more of the following: a frequency domain start position or a frequency domain end position of a subband; a frequency domain size of a subband; and an uplink transmission configuration, a downlink transmission configuration, a full duplex transmission configuration, or a flexible (flexible) transmission configuration of a subband.

According to the foregoing solution, the at least two types of SBFD time units are predefined in the protocol, and the frequency domain position of the subband, the frequency domain size of the subband, or the transmission configuration of the subband of each type of SBFD time unit is predefined in the protocol. In this way, the subband of each type of SBFD time unit can be quickly configured, to reduce overheads for indication of the SBFD time unit, so as to improve communication performance.

With reference to the first aspect, in some implementations of the first aspect, the first indication information further indicates a type of the SBFD time unit.

For example, the type of the SBFD time unit may be predefined in a protocol, and each type of SBFD time unit has a different uplink subband configuration, a different downlink subband configuration, a different frequency domain guard band configuration, or a different full duplex subband configuration.

For example, the type of the SBFD time unit may be configured or indicated by only using higher layer signaling or physical layer signaling. Alternatively, the type of the SBFD time unit may be configured or indicated by jointly using predefinition in the protocol, the higher layer signaling, and the physical layer signaling.

Optionally, higher layer signaling or physical layer signaling is sent, where the higher layer signaling or the physical layer signaling indicates a type of the SBFD OS. The higher layer signaling or the physical layer signaling carries a bitmap or an index of a table. One or more bits in the bitmap correspond to a different SBFD OS type, or each index of the table corresponds to a different SBFD OS type. The higher layer signaling may be RRC and a MAC-CE. For example, a specific implementation may be as follows.

For example, one or more bits in the bitmap correspond to a different SBFD OS type. One bit may indicate an SBFD OS type, or a plurality of bits may indicate an SBFD OS type. For example, a bit 1 indicates an SBFD OS 1 type, and a bit 0 indicates an SBFD OS 2 type. Alternatively, bits 0 0 indicate an SBFD OS 1 type, 0 1 indicates an SBFD OS 2 type, 1 0 indicates an SBFD OS 3 type, and 1 1 indicates an SBFD OS 4 type. Alternatively, bits 0 0 indicate an SBFD OS 1 type, 0 1 indicates an SBFD OS 2 type, 1 0 indicates a DL OS, and 1 1 indicates a UL OS.

For example, each index of the table corresponds to a different SBFD OS type combination, and the table includes a plurality of SBFD OS types.

According to the foregoing solution, the frequency domain position of the SBFD OS is predefined in the protocol, or the higher layer signaling or the physical layer signaling indicates the type of the SBFD OS, so that SBFD OS types included in each SBFD time period are quickly indicated. In this way, overheads for indication of the SBFD OS types can be reduced, to improve communication performance.

With reference to the first aspect, in some implementations of the first aspect, independently configuring the CORESET resource for the at least two types of SBFD time units includes one or more of the following:
independently configuring a granularity parameter of a control channel element CCE for each type of SBFD time unit among the at least two types of SBFD time units;
independently configuring, for each type of SBFD time unit among the at least two types of SBFD time units, a time domain resource occupied by a CORESET;
independently configuring, for each type of SBFD time unit among the at least two types of SBFD time units, a frequency domain resource occupied by the CORESET;
independently configuring a mapping parameter of a CCE and a resource element group REG for each type of SBFD time unit among the at least two types of SBFD time units; and
independently configuring a parameter of a demodulation reference signal DMRS resource for each type of SBFD time unit among the at least two types of SBFD time units.

According to the foregoing solution, different CORESET resources are configured for the different types of SBFD time units. Frequency domain resources of downlink subbands of the different types of SBFD time units are different, and therefore different CORESET resources are configured for different downlink frequency domain resources, so that a CORESET resource configuration can support a flexibly changing downlink frequency domain resource, to improve communication performance.

With reference to the first aspect, in some implementations of the first aspect, independently configuring, for the at least two types of SBFD time units, the frequency domain resource occupied by the CORESET includes independently configuring a first bitmap, where the first bitmap indicates a position of the frequency domain resource occupied by the CORESET. The independently configuring the first bitmap includes one or more of the following:
independently configuring a quantity of first bitmaps for each type of SBFD time unit among the at least two types of SBFD time units;
independently configuring, for each type of SBFD time unit among the at least two types of SBFD time units, a quantity of bits included in the first bitmap;
independently configuring, for each type of SBFD time unit among the at least two types of SBFD time units, a quantity of resource blocks RBs corresponding to each bit included in the first bitmap;
independently configuring, for each type of SBFD time unit among the at least two types of SBFD time units, a frequency domain size that is of the CORESET and that is indicated by the first bitmap; and
independently configuring, for each type of SBFD time unit among the at least two types of SBFD time units, a frequency domain position that is of the CORESET and that is indicated by the first bitmap.

It should be understood that the first bitmap may indicate the position of the frequency domain resource of the CORESET, and a bitmap parameter frequencyDomainResource indicates frequency domain bandwidth occupied by the CORESET. For example, a parameter frequencyDomainResources1 may indicate a frequency domain position of a CORESET configured for an SBFD OS 1 type.

Optionally, a bitmap (Bitmap) is configured in an available downlink frequency domain resource. For example, a bitmap (Bitmap) of the SBFD OS 1 type is configured in a downlink bandwidth part (bandwidth part, BWP) or downlink bandwidth, including one or more bitmap indications, for example, a bitmap #1.1 and a bitmap #1.2.

According to the foregoing solution, different bitmaps are configured for different types of SBFD OSs. In this way, the different bitmaps can indicate different frequency domain positions of CORESETs, so that overheads consumed when the bitmaps indicate the frequency domain positions of the CORESETs can be reduced. In addition, frequency domain resources are constantly changing, and setting different bitmaps for different frequency domain resources can adapt to the different frequency domain resources. Therefore, configuring the different bitmaps for the different types of SBFD OSs to indicate the frequency domain positions of the CORESETs can reduce overheads for indication of the bitmaps, to improve communication performance.

With reference to the first aspect, in some implementations of the first aspect, the granularity parameter of the CCE indicates a quantity of resource elements REs included in one CCE, a quantity of RBs included in one CCE, a quantity of REGs included in one CCE, or a frequency domain size included in one CCE.

For example, the configuration granularity of the CCE is selected based on downlink BWPs or downlink bandwidth occupied by the different types of SBFD OSs, so that downlink frequency domain resources are fully utilized, to avoid a waste of resources and reduce latency.

For example, when the SBFD time unit occupies a large downlink BWP or wide downlink bandwidth, configuration is performed in a unit of CCEs. For example, when 1 CCE=6 REGs, 8 CCEs may be configured in frequency domain, and 2 OSs may be configured in time domain. When the SBFD time unit occupies a small downlink BWP or narrow downlink bandwidth, configuration may be performed in a unit of X1 RB/CCE. For example, when 1 CCE=4 REGs, 2 CCEs may be configured in frequency domain, and 6 or 7 OSs may be configured in time domain. In this way, downlink frequency domain resources are fully utilized, to avoid a waste of resources and reduce latency.

With reference to the first aspect, in some implementations of the first aspect, the independently configuring the mapping parameter of the CCE and the REG for each type of SBFD time unit among the at least two types of SBFD time units includes one or more of the following:
independently configuring a mapping manner of the CCE and the REG for each type of SBFD time unit among the at least two types of SBFD time units, where the mapping parameter of the CCE and the REG indicates the mapping manner of the CCE and the REG, and the mapping manner includes an interleaved mapping manner or a non-interleaved mapping manner;
independently configuring a parameter of a REG bundle for each type of SBFD time unit among the at least two types of SBFD time units, where the parameter of the REG bundle indicates a quantity of REGs included in the REG bundle; and
independently configuring an interleaving size parameter for each type of SBFD time unit among the at least two types of SBFD time units.

In this embodiment of this application, in the non-interleaved mapping manner, a quantity of REGs included in one REG bundle is fixed. For example, 1 REG bundle=4 REGs. In the interleaved mapping manner, a value L of a REG bundle size is determined by a quantity of OSs occupied by the CORESET. For example, a quantity of REGs in one REG bundle is more flexible, and may be specifically 4, 6, or 7. A correspondence between a CCE index and a REG bundle is determined by an interleaver.

According to the foregoing solution, CORESET resources are independently configured for different types of SBFD time units, and quantities of OSs, quantities of CCEs, quantities of RBs, and quantities of REs are separately and independently configured in time domain and frequency domain based on sizes of downlink BWPs or downlink bandwidth occupied by the different types of SBFD time units, so that frequency domain resources of different DL subbands are fully utilized, to reduce PDCCH transmission latency, so as to improve communication performance.

With reference to the first aspect, in some implementations of the first aspect, independently configuring the parameter of the DMRS resource includes one or more of the following:
density configured for the DMRS;
a subcarrier position configured for the DMRS; and
a resource mapping manner configured for the DMRS.

For example, when each type of SBFD time unit occupies a large downlink BWP or wide downlink bandwidth, a small quantity of DMRSs are required for demodulation. When each type of SBFD time unit occupies a small downlink BWP or narrow downlink bandwidth, uplink cross-link interference (cross-link interference, CLI) is severe, and more DMRSs are required for demodulation. Therefore, when the DMRS is configured for the CORESET resource for the SBFD time unit, DMRSs may be more densely located. Different DMRS resources are configured for different SBFD OS types, so that demodulation performance can be improved, to improve communication reliability.

With reference to the first aspect, in some implementations of the first aspect, resource mapping manners of DMRSs for the at least two types of SBFD time units are predefined in a protocol.

With reference to the first aspect, in some implementations of the first aspect, before sending the first indication information, the method further includes: receiving third indication information from the terminal device, where the third indication information indicates a capability of the terminal device to support SBFD or support a plurality of SBFD time units.

According to the foregoing solution, the network device receives the third indication information sent by the terminal device, and obtains, from the third indication information, a capability of a user to support SBFD. Based on the SBFD capability, the network device can accurately indicate the SBFD time period to the user equipment that can support SBFD. This can improve indication efficiency of the network device, and avoid indicating the SBFD time period to user equipment that does not support SBFD.

According to a second aspect, a communication method is provided. The method may be performed by a terminal device, or may be performed by a chip or a circuit of the terminal device. This is not limited in this application. For ease of description, an example in which the method is performed by the terminal device is used below for description.

The method includes: receiving first indication information, where the first indication information indicates at least one SBFD time period, the SBFD time period includes at least two types of SBFD time units, each type of SBFD time unit includes an uplink subband and a downlink subband, and different types of SBFD time units have different subband configurations; and independently configuring a CORESET resource for each type of SBFD time unit among the at least two types of SBFD time units.

It should be understood that the SBFD time period indicates a period of time occupied by an SBFD resource in time domain. For example, the SBFD time period may be a slot, a mini-slot, a symbol, a frame structure, a subframe, or a time period related to a subcarrier spacing. A time unit is a unit time included in a time period. For example, the time unit may be a symbol, for example, an orthogonal frequency division multiplexing symbol (OS). For example, one SBFD slot may include a plurality of types of SBFD OSs. Specific names of the time period and the time unit are not limited in embodiments of this application.

It should be understood that the time period related to the subcarrier spacing may be understood as that a quantity of symbols included in the time period is related to the subcarrier spacing.

It should be understood that each type of SBFD time unit includes an uplink subband and a downlink subband. The uplink subband and the downlink subband may not overlap, or may partially overlap.

In addition, independently configuring the CORESET resource means that configuration processes of different types of time units are independent of each other, or configuration is performed separately for different types of time units. CORESET resources configured for all types of SBFD time units may be the same or may be different. For ease of description, in this embodiment of this application, an example in which the SBFD time period is a slot and the SBFD time unit is an SBFD OS is used for description. However, this embodiment of this application is also applicable to a time period and a time unit of other names.

According to the foregoing solution, the indicated SBFD time period includes the at least two types of SBFD time units, and each type of SBFD time unit includes the uplink subband and the downlink subband. The CORESET resource is independently configured for each type of SBFD time unit in the different types of SBFD time units. In this way, each SBFD time unit has a downlink resource. This can ensure that user equipment can receive downlink information at any time, for example, downlink transmission data and downlink control information, and ensure that a CORESET resource configuration can support a flexibly changing downlink resource, so that latency can be reduced, to improve communication performance.

With reference to the second aspect, in some implementations of the second aspect, the method further includes: sending second indication information, where the second indication information indicates a correspondence between the SBFD time unit and the CORESET resource.

For example, the correspondence between the SBFD time unit and the CORESET resource includes: The correspondence is predefined in a protocol, or higher layer signaling or physical layer signaling indicates the correspondence.

With reference to the second aspect, in some implementations of the second aspect, the sending the second indication information further includes: sending higher layer signaling or physical layer signaling, where the higher layer signaling or the physical layer signaling carries the second indication information.

According to the foregoing solution, the user equipment may obtain, based on the correspondence between the SBFD time unit and the CORESET resource, the CORESET resources corresponding to the different types of SBFD time units. In other words, the CORESET resources are independently configured for the different types of SBFD time units, to ensure that a CORESET resource configuration can support a flexibly changing downlink resource. In particular, in comparison with a manner in which CORESET resources are uniformly configured for different types of SBFD time units by using RRC signaling, in this embodiment of this application, control information can be received at any time, to reduce latency, so as to improve communication performance.

With reference to the second aspect, in some implementations of the second aspect, that the different types of SBFD time units have the different subband configurations includes one or more of the following:
the uplink subbands have different frequency domain sizes and/or different frequency domain positions; or the downlink subbands have different frequency domain sizes and/or different frequency domain positions.

With reference to the second aspect, in some implementations of the second aspect, the method further includes:

The at least two types of SBFD time units are predefined in a protocol, and definition information of each type of SBFD time unit includes one or more of the following:
a frequency domain start position or a frequency domain end position of a subband;
a frequency domain size of a subband; and
an uplink transmission configuration, a downlink transmission configuration, a full duplex transmission configuration, or a flexible transmission configuration of a subband.

According to the foregoing solution, the at least two types of SBFD time units are predefined in the protocol, and the frequency domain position of the subband, the frequency domain size of the subband, or the transmission configuration of the subband of each type of SBFD time unit is predefined in the protocol. In this way, the subband of each type of SBFD time unit can be quickly configured, to reduce overheads for indication of the SBFD time unit, so as to improve communication performance.

With reference to the second aspect, in some implementations of the second aspect, the first indication information further indicates a type of the SBFD time unit.

According to the foregoing solution, the frequency domain position of the SBFD OS is predefined in the protocol, or the higher layer signaling or the physical layer signaling indicates the type of the SBFD OS, so that SBFD OS types included in each SBFD time period are quickly indicated. In this way, overheads for indication of the SBFD OS types can be reduced, to improve communication performance.

With reference to the second aspect, in some implementations of the second aspect, the independently configuring the CORESET resource for each type of SBFD time unit among the at least two types of SBFD time units includes one or more of the following:
independently configuring a granularity parameter of a control channel element CCE for each type of SBFD time unit among the at least two types of SBFD time units;
independently configuring, for each type of SBFD time unit among the at least two types of SBFD time units, a time domain resource occupied by a CORESET;
independently configuring, for each type of SBFD time unit among the at least two types of SBFD time units, a frequency domain resource occupied by the CORESET;
independently configuring a mapping parameter of a CCE and a resource element group REG for each type of SBFD time unit among the at least two types of SBFD time units; and
independently configuring a parameter of a demodulation reference signal DMRS resource for each type of SBFD time unit among the at least two types of SBFD time units.

With reference to the second aspect, in some implementations of the second aspect, the method further includes: determining, based on the second indication information, CORESET resources corresponding to the different types of SBFD time units.

Optionally, the CORESET resources corresponding to the different types of SBFD time units are determined based on the correspondence between the SBFD time unit and the CORESET resource, a configuration of a search space, and a CORESET configuration.

With reference to the second aspect, in some implementations of the second aspect, before receiving the first indication information, the method further includes: sending third indication information to a network device, where the third indication information indicates a capability of the terminal device to support SBFD or support a plurality of SBFD time units.

According to a third aspect, a communication apparatus is provided. The apparatus includes: a transceiver unit, configured to send first indication information to a terminal device, where the first indication information indicates at least one SBFD time period. The transceiver unit is further configured to send second indication information, where the second indication indicates a correspondence between the SBFD time unit and the CORESET resource.

Optionally, the transceiver unit is further configured to receive third indication information from the terminal device, where the third indication information indicates a capability of the terminal device to support SBFD or support a plurality of SBFD time units.

Optionally, a processing unit is configured to: indicate that the SBFD time period includes at least two types of SBFD time units, each type of SBFD time unit includes an uplink subband and a downlink subband, and different types of SBFD time units have different subband configurations; and independently configure a CORESET resource for each type of SBFD time unit among the at least two types of SBFD time units.

The transceiver unit may perform receiving and sending processing in the first aspect, and the processing unit of the communication apparatus may perform processing other than the receiving and sending in the first aspect.

According to a fourth aspect, a communication apparatus is provided. The apparatus includes: a transceiver unit, configured to receive first indication information sent by a network device, where the first indication information indicates at least one SBFD time period.

Optionally, the transceiver unit is further configured to send third indication information, where the third indication information indicates a capability of a terminal device to support SBFD or support a plurality of SBFD time units.

Optionally, the transceiver unit is further configured to receive second indication information sent by the network device, where the second indication indicates a correspondence between an SBFD time unit and a CORESET resource.

For example, that a processing unit is configured to determine, based on the second indication information, CORESET resources corresponding to different types of SBFD time units includes: determining the CORESET resources corresponding to the different types of SBFD time units based on the correspondence between the SBFD time unit and the CORESET resource, a configuration of a search space, and a CORESET configuration.

According to a fifth aspect, a communication apparatus is provided, including a processor. The processor is configured to execute a computer program, to cause the apparatus to perform the method in the first aspect and the second aspect and any one of the possible implementations thereof.

Optionally, there are one or more processors.

Optionally, the communication apparatus further includes a memory, the memory is configured to store the computer program, and there are one or more memories.

Optionally, the memory may be integrated with the processor, or the memory and the processor are separately disposed, or the memory is located in the processor.

Optionally, the communication apparatus further includes a transceiver circuit, for example, a transceiver or an input/output circuit.

According to a sixth aspect, a communication system is provided, including a network device and a terminal device. The network device is configured to perform the method in the possible implementations of the first aspect, and the terminal device is configured to perform the method in the possible implementations of the second aspect.

According to a seventh aspect, a computer-readable storage medium is provided. The computer-readable storage medium stores a computer program or code. When the computer program or the code is run on a computer, the computer is caused to perform the method in the first aspect and the second aspect and any one of the possible implementations thereof.

According to an eighth aspect, a chip (or a chip system) is provided, including at least one processor. The processor is configured to run a computer program, to cause an apparatus in which the chip is installed to perform the method in the first aspect and the second aspect and any one of the possible implementations thereof.

The chip may include an output circuit or interface configured to send information or data and an input circuit or interface configured to receive information or data.

According to a ninth aspect, a computer program product is provided. The computer program product includes computer program code. When the computer program code is run on a computer, the method in the first aspect and the second aspect and any one of the possible implementations thereof is performed.

### BRIEF DESCRIPTION OF DRAWINGS

FIG. 1A and FIG. 1B are diagrams of a communication system applicable to an embodiment of this application;
FIG. 2 is a diagram of a communication system applicable to an embodiment of this application;
FIG. 3 is a diagram of a communication system applicable to an embodiment of this application;
FIG. 4 is a diagram of a communication system applicable to an embodiment of this application;
FIG. 5 is a diagram of a communication system applicable to an embodiment of this application;
FIG. 6A and FIG. 6B are diagrams of two frame structures;
FIG. 7 is a diagram of an SBFD time period according to an embodiment of this application;
FIG. 8 is a schematic flowchart of a communication method according to an embodiment of this application;
FIG. 9 is a diagram of an SBFD time period according to an embodiment of this application;
FIG. 10A to FIG. 10E are diagrams of an SBFD time period according to an embodiment of this application;
FIG. 11 is a diagram of an SBFD time period configuration according to an embodiment of this application;
FIG. 12A and FIG. 12B are a diagram of an SBFD time period configuration according to an embodiment of this application;
FIG. 13 is a diagram of an apparatus according to an embodiment of this application; and
FIG. 14 is a diagram of an apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation mobile communication system, or an integrated system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. In embodiments of this application, user equipment is used as an example for description.

The terminal device may be a device that provides voice/data, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that focus on only one type of application function and need to be used together with other devices such as smartphones, such as various smart bands or smart jewelry for monitoring physical signs.

In embodiments of this application, an apparatus configured to implement a function of the terminal device, namely, a terminal apparatus, may be a terminal device, or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that implements a base station function in D2D, V2X, or M2M communication, a network side device in a 6G network, a device that implements a base station function in a future communication system, or the like. The base station may support networks using a same access technology or different access technologies. A specific technology and a specific device form that are used by the network device are not limited in embodiments of this application. For ease of description, an example in which a base station represents the network device is used below for description in this application.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node.

In different systems, the CU (or the CU-CP and the CU-UP), the DU, or an RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system or a chip, where the apparatus may be installed in the network device. In embodiments of this application, the chip system may include a chip, or may include a chip and another discrete component.

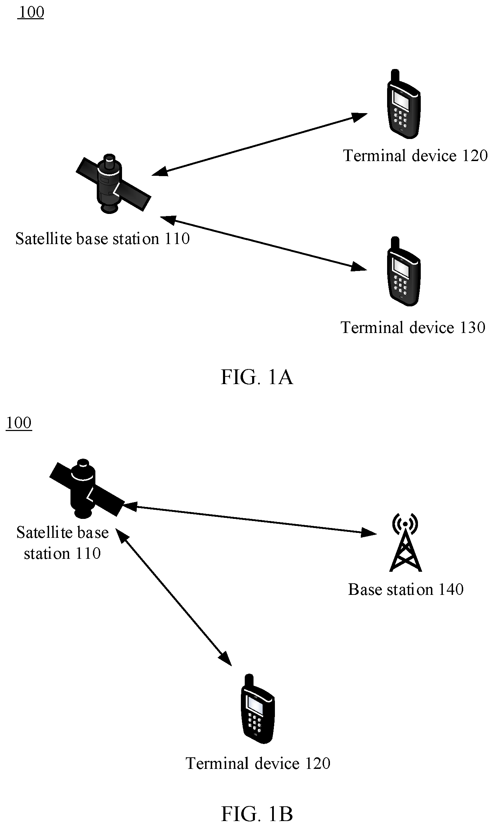

FIG. 1A and FIG. 1B are diagrams of a communication system 100 applicable to an embodiment of this application. As shown in FIG. 1A, the communication system 100 includes a satellite base station 110, a terminal device 120, and a terminal device 130.

The satellite base station 110 provides a communication service for the terminal device 120 and the terminal device 130. The satellite base station transmits downlink data to the terminal device 120 and the terminal device 130. Specifically, the downlink data for transmission is encoded through channel coding, and the satellite base station performs constellation modulation on the data after channel coding, and then transmits the data to the terminal device 120 and the terminal device 130. Correspondingly, the terminal device 120 and the terminal device 130 transmit uplink data to the base station. Specifically, the uplink data is encoded through channel coding, and the terminal device 120 and the terminal device 130 perform constellation modulation on the data after channel coding, and then transmit the data to the satellite base station 110.

In this embodiment of this application, the satellite base station 110 may also communicate with a base station. The satellite may serve as a base station, and may also serve as a terminal device. As shown in FIG. 1B, the communication system includes a satellite base station 110, a terminal device 120, and a base station 140. The satellite may be an unmanned aerial vehicle, a hot air balloon, a low-orbit satellite, a medium-orbit satellite, a high-orbit satellite, or the like. The satellite may also refer to a non-terrestrial base station, a non-terrestrial device, or the like. The base station may be a macro base station, a micro base station, a relay node, a donor node, or the like, or a combination thereof. This is not limited in embodiments of this application.

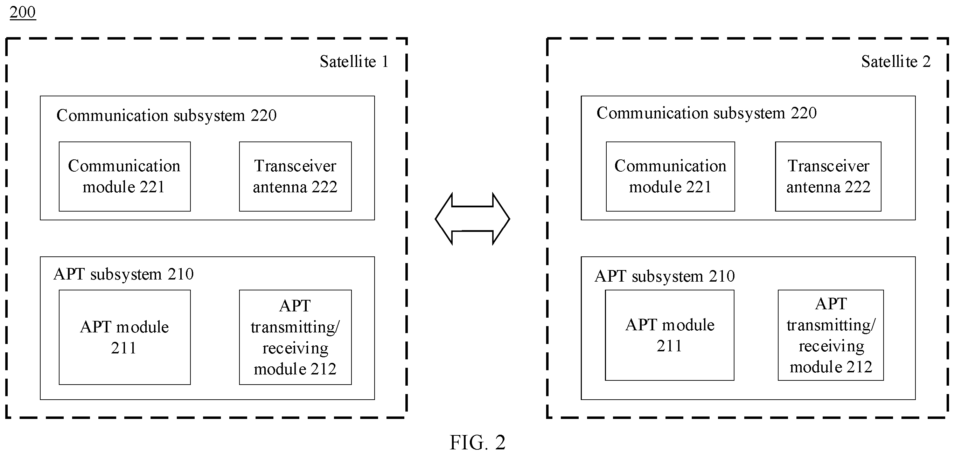

FIG. 2 is a diagram of a communication system 200 applicable to an embodiment of this application. As shown in FIG. 2, an inter-satellite link communication system 200 includes an acquisition, pointing, and tracking (acquisition, pointing, and tracking, APT) subsystem 210 and a communication subsystem 220. The communication subsystem 220 is responsible for inter-satellite information transmission, and is a main body of the inter-satellite communication system. The communication subsystem 220 includes a communication module 221 and a transceiver antenna 222. The APT subsystem 210 is responsible for acquisition, pointing, and tracking between satellites. Acquisition is for determining a direction of arrival of an incident signal, pointing is for adjusting a transmit wave to aim at a receiving direction, and tracking is for continuously adjusting pointing and acquisition in an entire communication process. To minimize impact of channel attenuation and impact of interference in a channel while ensuring high confidentiality and a high transmission rate, the APT subsystem 210 needs to be adjusted in real time to adapt to changes continuously. The APT subsystem 210 includes an APT module 211 and an APT transmitting/receiving module 212. Optionally, the APT subsystem 210 may be an optical system, and the communication subsystem 220 may be an optical communication system or a microwave band system, and uses a single high-gain antenna. The APT subsystem 210 and the communication subsystem 220 are independent systems.

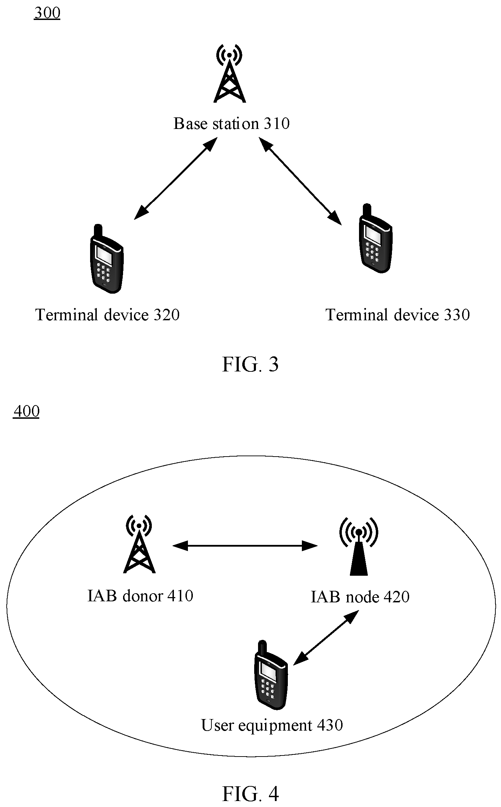

FIG. 3 is a diagram of a communication system 300 applicable to an embodiment of this application. As shown in FIG. 3, the communication system 300 includes a cell, and each cell includes a base station (base station, BS) 310, a terminal device 320, and a terminal device 330. The base station 310 is configured to provide a communication service for the terminal device 320 and the terminal device 330. The communication system 300 may include a plurality of terminal devices. In this embodiment of this application, the terminal device is a mobile station (mobile station, MS).

Optionally, the base station 310 includes a baseband unit (baseband unit, BBU) and a remote radio unit (RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

FIG. 4 is a diagram of a communication system 400 applicable to an embodiment of this application. As shown in FIG. 4, the communication system 400 includes an integrated access and backhaul (integrated access and backhaul, IAB) donor (IAB Donor) 410, an IAB node (IAB node) 420, and user equipment 430. A link between the IAB donor (IAB Donor) 410 and the IAB node (IAB node) 420 is a backhaul link, and a link between the terminal device 430 and the IAB node (IAB node) 420 is an access link.

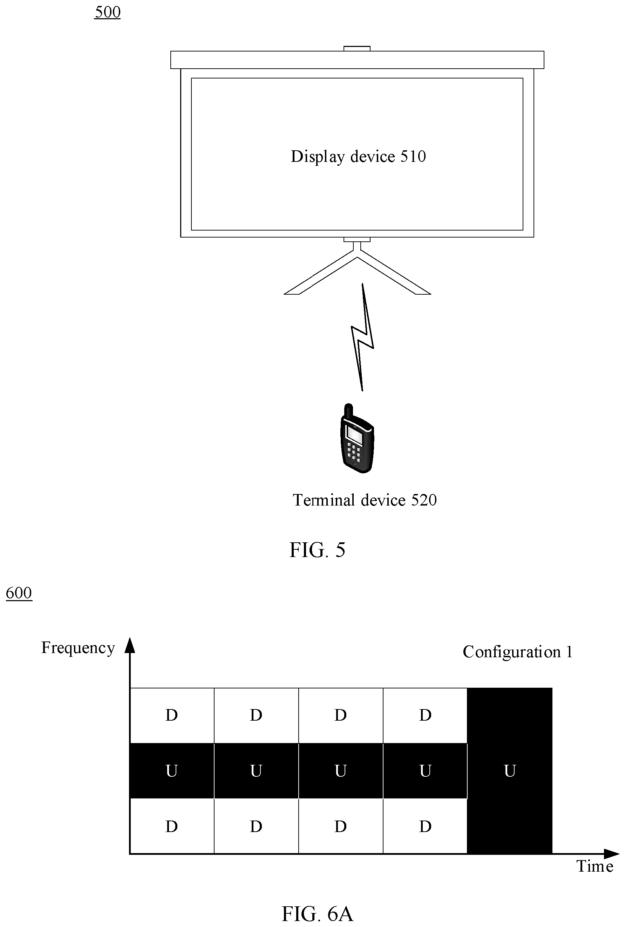

FIG. 5 is a diagram of wireless projection 500. As shown in FIG. 5, the wireless projection 500 includes a display device 510 and a terminal device 520. The terminal device 520 projects content of the terminal device onto the display device 510. For example, a video in a mobile phone is projected onto a television. Specifically, after the terminal device 520 and the display device 510 are connected to same Wi-Fi, data is transmitted by using a projection protocol. The terminal device 520 may search for a projection broadcast service in an area covered by the Wi-Fi, to implement wireless projection. The display device may be a television, a tablet computer, a notebook computer, a palmtop computer, or the like. This is not limited in embodiments of this application.

Optionally, embodiments of this application may also be applied to data encoding and decoding in a VR game and an APP of a mobile phone, and the like. It should be understood that FIG. 1A and FIG. 1B to FIG. 5 are examples of communication systems applicable to embodiments of this application, and are merely simplified diagrams of examples for ease of understanding. The foregoing communication system may further include another network device or may further include another terminal device, which is not shown in FIG. 1A and FIG. 1B to FIG. 5. Embodiments of this application are applicable to any communication scenario in which a transmit end device communicates with a receive end device.

A communication system to which embodiments of this application are applicable is not limited thereto. During actual application, embodiments of this application are applicable to a scenario with a low-latency requirement, or are applicable to service scenarios with low-latency and high-reliability requirements.

In a communication system, there are growing application scenarios with low-latency and high-reliability requirements. For example, URLLC, one of three major application scenarios of 5G communication, features low latency and high reliability. The URLLC scenario is widely used, and requirements for latency, reliability, and bandwidth vary with the scenario. Specifically, the scenario includes a power automation "telemetry, remote communication, and remote control" scenario, an internet of vehicles scenario, and an industrial manufacturing scenario. The following uses the URLLC scenario as a main example for description, and it does not indicate that embodiments of this application are not applicable to another scenario with a low-latency requirement. Embodiments of this application are also applicable to service scenarios with low-latency and high-reliability requirements.

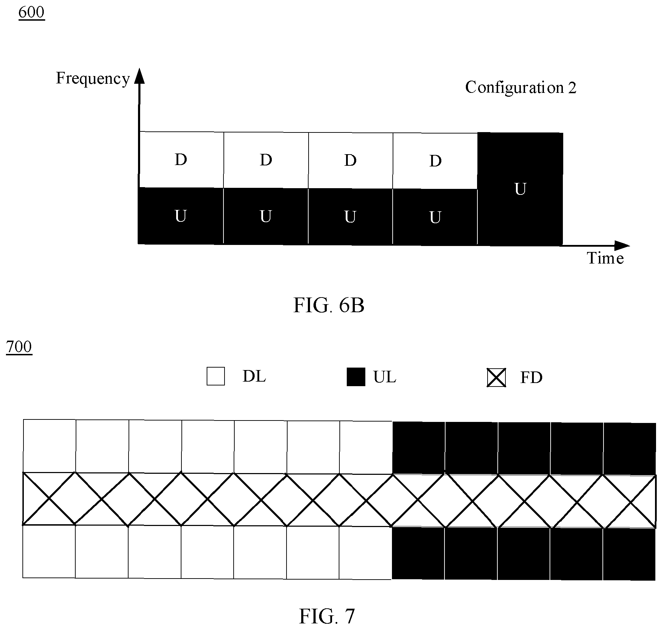

FIG. 6A and FIG. 6B are diagrams of two SBFD frame structures. As shown in FIG. 6A and FIG. 6B, a white area represents a downlink orthogonal frequency division multiplexing symbol (downlink orthogonal frequency division multiplexing symbol, DL OS), which is represented by D in FIG. 6A; and a black area represents an uplink OFDM symbol (uplink OFDM OS, UL OS), which is represented by U in FIG. 6B. It can be learned from the two SBFD frame structures in FIG. 6A and FIG. 6B that each slot includes at least one UL OS, and it is impossible to support downlink transmission at any time in a process of uplink data transmission and downlink data transmission. Alternatively, in the SBFD frame structures, each subframe includes at least one UL slot, and it is impossible to support downlink transmission at any time. However, a URLLC service requires uplink transmission at any time and downlink transmission at any time. For example, a downlink resource is configured in each slot or each OS. As a result, the foregoing frame structures cannot meet a low-latency requirement of 6G URLLC. In addition, in a CORESET resource configuration process, one CORESET may be configured with one to three OSs in time domain, and one CORESET may be configured with {1, 2, 4, 8, 16} CCEs in frequency domain. Such a configuration manner cannot support a flexibly changing downlink resource, and it is impossible to configure downlink control information at any time.

For the problem existing in the solution in FIG. 6A and FIG. 6B, embodiments of this application provide a communication method and a communication apparatus. A network device sends first indication information, where the first indication information indicates at least one SBFD time period, the indicated SBFD time period includes at least two types of SBFD time units, and each type of SBFD time unit includes an uplink subband and a downlink subband. A CORESET resource is independently configured for each type of SBFD time unit in the different types of SBFD time units. In this way, each SBFD time unit has a downlink resource. This can ensure that user equipment can receive downlink information at any time, for example, downlink transmission data and downlink control information, and ensure that a CORESET resource configuration can support a flexibly changing downlink resource, so that latency can be reduced, to improve communication performance.

It should be noted that this application is not limited to a case in which the uplink subband and the downlink subband do not overlap. The uplink subband and the downlink subband of the SBFD time unit may alternatively partially overlap. For details, refer to FIG. 7.

FIG. 7 is a diagram of an SBFD time period according to an embodiment of this application. As shown in FIG. 7, a white area represents a downlink subband (DL), a black area represents an uplink subband (UL), and an area with a cross represents an overlapping part of the uplink subband and the downlink subband, that is, a full duplex subband (FD). A downlink subband and an uplink subband of each type of SBFD time unit may partially overlap.

For ease of understanding the solutions in embodiments of this application, the following first describes terms that may be used in embodiments of this application.

### (1) Physical downlink control channel (physical downlink control channel, PDCCH)

The physical downlink control channel PDCCH is used to transmit downlink control information, and the PDCCH bears scheduling and other control information, specifically including a transmission format, resource allocation, an uplink scheduling grant, power control, uplink retransmission information, and the like. The PDCCH is a set of physical resource elements, and bears uplink and downlink control information. According to different scopes of the PDCCH, information borne by the PDCCH is classified into common control information (a common search space) and dedicated control information (a dedicated search space), where the search space defines a start location of bind detection and a channel search manner. Data borne by the PDCCH is downlink control information (downlink control information, DCI), which mainly includes physical downlink shared channel (physical downlink shared channel, PDSCH) and physical uplink shared channel (physical uplink shared channel, PUSCH) transmission resource scheduling information, and may further include an uplink power control indication, for example, a PUSCH, a PUCCH, and an SRS, and a slot format indicator.

The PDCCH dynamically sends control information to user equipment, and the user equipment obtains the control information, to determine how to demodulate or decode the PDSCH and how to assemble and send PUSCH data.

In addition, the PDCCH relates to two important aspects: one is a resource for transmitting the control information, that is, a control resource set (control resource set, CORESET), and the other is how the user equipment obtains the control information from the CORESET.

### (2) Control resource set (control resource set, CORESET)

The CORESET is a resource set for control information, includes a physical resource set, and further includes a set of some parameters, for example, DCI. The CORESET is a physical resource set in a specific area in a downlink resource grid, and is used to bear a PDCCH (DCI). For example, the PDCCH is designed to be sent in a configurable CORESET. The CORESET may configure its RB set and OS set by using a corresponding PDCCH search space.

In time domain, the CORESET may be located at any position in a slot. A scheduling position of a time domain OFDM symbol of the CORESET varies with a scenario. For example, in a URLLC (low-latency and high-reliability) scenario, the time domain OFDM symbol of the CORESET is scheduled at a non-start position of a time period, and in this case, user equipment may directly demodulate the PDCCH in the slot instead of waiting for a start of a next slot, to effectively reduce latency.

For example, a basic component unit of the CORESET is a resource element group (resource element group, REG), which is also referred to as an RE group. Each REG includes 12 REs on one OFDM symbol. The CORESET occupies a plurality of resource blocks (resource block, RB) in frequency domain, and a configured frequency domain resource position cannot exceed a frequency domain range of a bandwidth part (bandwidth part, BWP).

### (3) Control channel element (control channel element, CCE)

The CCE is a unit of PDCCH channel resource allocation. One CCE includes a plurality of REGs. For example, one CCE may occupy six REGs, which include 72 frequency domain subcarriers in total, including 54 data REs and 18 DRMS REs. A quantity of CCEs in a PDCCH is referred to as an aggregation level. When the PDCCH is sent, the aggregation level to be used to send control information may be determined according to an actual wireless channel environment. When the wireless channel environment is poor, a high aggregation level may be used to achieve good demodulation performance. When the wireless channel environment is good, a low aggregation level is used.

### (4) Resource element group (resource element group, REG)

The REG is a set of REs in a control area, is used to map a downlink control channel, and occupies one OFDM symbol in time domain and 12 consecutive subcarriers (one RB) in frequency domain.

### (5) Demodulation reference signal (demodulation reference signal, DMRS)

The DMRS is used for uplink and downlink data demodulation. DMRSs for a PDCCH are classified into two types: narrowband DMRSs and wideband DMRSs. When a higher layer parameter precoderGranularity is equal to precoderGranularity, the DMRS is configured as a narrowband DMRS. In other words, a DMRS sequence is sent only on a frequency domain resource for scheduling the PDCCH. In this case, a precoding granularity is a REG bundle. When the higher layer parameter precoderGranularity is equal to allContiguousRBs, the DMRS is configured as a wideband DMRS. In other words, the DMRS sequence is sent on frequency domain resources in an entire CORESET. Compared with the narrowband DRMS, the wideband DMRS can increase a quantity of DMRSs for demodulating the PDCCH, so that PDCCH DMRSs in the PDCCH and in an RB adjacent to the PDCCH can be used for time-domain and frequency-domain joint channel estimation, to improve channel estimation accuracy and PDCCH demodulation performance.

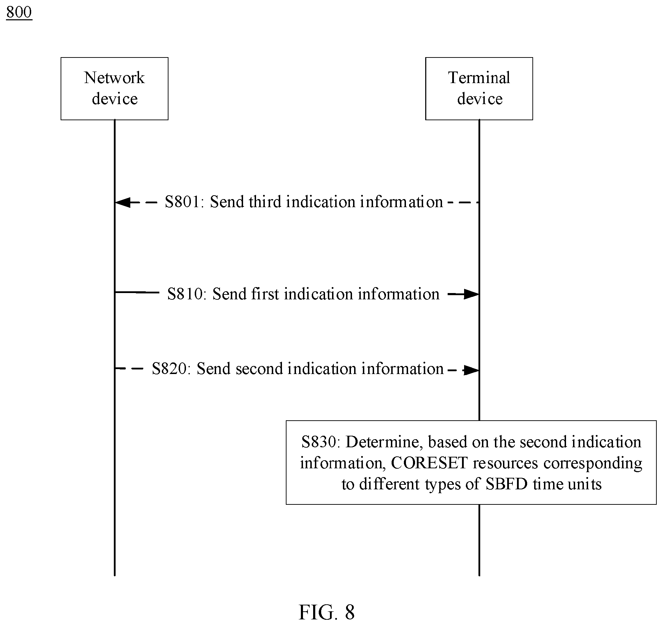

The following describes, in detail with reference to the accompanying drawings, the communication method provided in embodiments of this application. Embodiments provided in this application are applicable to any communication scenario in which a transmit end device communicates with a receive end device, for example, applicable to the communication system shown in FIG. 1A and FIG. 1B to FIG. 5. To implement uplink transmission at any time and downlink transmission at any time in a low-latency and high-reliability scenario, this application provides a method shown in FIG. 8.

FIG. 8 is a schematic flowchart of a communication method 800 according to an embodiment of this application. As shown in FIG. 8, the communication method 800 may include the following plurality of steps. It should be understood that a procedure may be performed by a network device and a terminal device, the network device is configured to transmit downlink data to the terminal device, and correspondingly the terminal device is configured to transmit uplink data to the network device. For ease of description, the following uses the network device and the terminal device as execution bodies for description.

S810: The network device sends first indication information, and correspondingly the terminal device receives the first indication information from the network device, where the first indication information indicates at least one SBFD time period.

For example, the SBFD time period includes at least two types of SBFD time units, each type of SBFD time unit includes an uplink subband and a downlink subband, and different types of SBFD time units have different subband configurations. A CORESET resource is independently configured for each type of SBFD time unit among the at least two types of SBFD time units.

It should be understood that the SBFD time period indicates a period of time occupied by an SBFD resource in time domain. For example, the SBFD time period may be a slot, a mini-slot, a symbol, a frame structure, a subframe, or a time period related to a subcarrier spacing. A time unit is a unit time included in a time period. For example, the time unit may be a symbol, for example, an orthogonal frequency division multiplexing symbol (OS). For example, one SBFD slot may include a plurality of types of SBFD OSs. Specific names of the time period and the time unit are not limited in embodiments of this application.

It should be understood that the time period related to the subcarrier spacing may be understood as that a quantity of symbols included in the time period is related to the subcarrier spacing.

In addition, independently configuring the CORESET resource means that configuration processes of different types of time units are independent of each other, or configuration is performed separately for different types of time units. CORESET resources configured for all types of SBFD time units may be the same or may be different. For ease of description, in this embodiment of this application, an example in which the SBFD time period is a slot and the SBFD time unit is an SBFD OS is used for description. However, this embodiment of this application is also applicable to a time period and a time unit of other names.

It should be understood that each type of SBFD time unit includes an uplink subband and a downlink subband. The uplink subband and the downlink subband may not overlap, or may partially overlap.

Optionally, that the different types of SBFD time units have the different subband configurations includes one or more of the following:
the uplink subbands have different frequency domain sizes and/or different frequency domain positions; or the downlink subbands have different frequency domain sizes and/or different frequency domain positions.

For example, each type of SBFD OS has a different uplink subband configuration and a different downlink subband configuration. For example, an SBFD OS 1 type includes two downlink subbands and one uplink subband, where each downlink subband occupies 50 RBs and the uplink subband occupies 10 RBs, and an SBFD OS 2 type includes one downlink subband and two uplink subbands, where the downlink subband occupies 10 RBs and each uplink subband occupies 100 RBs. A type of an SBFD OS included in each SBFD time period is determined by a frequency domain position or a frequency domain size of a downlink subband or an uplink subband.

According to the foregoing solution, the different types of SBFD time units have different uplink subband configurations and different downlink subband configurations. For example, the downlink subbands have different frequency domain sizes and/or different frequency domain positions. In this way, each SBFD time unit has a downlink resource, and subband configurations are diversified, so that the network device can dynamically adjust a subband configuration based on traffic of user equipment and a latency requirement of the user equipment, to reduce latency, so as to improve communication performance.

Optionally, the at least two types of SBFD OSs are predefined in a protocol, and definition information of each type of SBFD OS includes one or more of the following: a frequency domain start position or a frequency domain end position of a subband; a frequency domain size of a subband; and an uplink transmission configuration, a downlink transmission configuration, a full duplex transmission configuration, or a flexible (flexible) transmission configuration of a subband.

According to the foregoing solution, the at least two types of SBFD time units are predefined in the protocol, and the frequency domain position of the subband, the frequency domain size of the subband, or the transmission configuration of the subband of each type of SBFD time unit is predefined in the protocol. In this way, the subband of each type of SBFD time unit can be quickly configured, to reduce overheads for indication of the SBFD time unit, so as to improve communication performance.

Optionally, the first indication information further indicates a type of the SBFD time unit.

In an example, the type of the SBFD time unit may be predefined in a protocol, and each type of SBFD time unit has a different uplink subband configuration and a different downlink subband configuration.

For example, the type of the SBFD time unit may be configured or indicated by only using higher layer signaling or physical layer signaling. Alternatively, the type of the SBFD time unit may be configured or indicated by jointly using predefinition in the protocol, the higher layer signaling, and the physical layer signaling.

In another example, higher layer signaling or physical layer signaling is sent, where the higher layer signaling or the physical layer signaling indicates a type of the SBFD OS. The higher layer signaling or the physical layer signaling carries a bitmap or an index of a table. One or more bits in the bitmap correspond to a different SBFD OS type, or each index of the table corresponds to a different SBFD OS type. The higher layer signaling may be RRC and a MAC-CE. For example, a specific implementation may be as follows.

For example, one or more bits in the bitmap correspond to a different SBFD OS type. One bit may indicate an SBFD OS type, or a plurality of bits may indicate an SBFD OS type. For example, when one bit is used for indication, the indication bitmap (Bitmap) is [1 1 1 1 1 1 1 1 1 0 0 0 0 0]. In this case, the bit 1 indicates an SBFD OS 1 type, and the bit 0 indicates an SBFD OS 2 type. When a plurality of bits are used for indication, the indication bitmap is [1 1 0 1 0 1 0 1 1 0 0 0 0 0 1 1 0 1 0 1 0 1 1 0 0 0 0 0]. In this case, 0 0 indicates an SBFD OS 1 type, 0 1 indicates an SBFD OS 2 type, 1 0 indicates an SBFD OS 3 type, and 1 1 indicates an SBFD OS 4 type. Alternatively, the indication bitmap is [1 1 0 1 0 1 0 1 0 1 0 1 1 0 0 0 0 0]. In this case, 0 0 indicates an SBFD OS 1 type, 0 1 indicates an SBFD OS 2 type, 1 0 indicates DL, and 1 1 indicates UL.

For example, each index of the table corresponds to a different SBFD OS type combination, and the table includes a plurality of SBFD OS types. For example, Table 1 is a table predefined in a protocol. Details are shown in Table 1.

**Table 1**

| Index | OS type in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | 1 | 1 | 1 | 1 | 1 | 1 | 1 | 1 | 1 | 1 | 1 | 1 | 1 | 1 |
| 1 | 0 | 0 | 0 | 0 | 0 | 0 | 0 | 0 | 0 | 0 | 0 | 0 | 0 | 0 |
| 2 | F | F | F | F | F | F | F | F | F | F | F | F | F | F |
| 3 | 1 | 1 | 1 | 1 | 1 | 1 | 1 | 1 | 1 | 1 | 1 | 1 | 1 | F |
| 4 | 1 | 1 | 1 | 1 | 1 | 1 | 1 | 1 | 1 | 1 | 1 | 1 | F | F |
| 5 | 1 | 1 | 1 | 1 | 1 | 1 | 1 | 1 | 1 | 1 | 1 | F | F | F |
| 6 | 1 | 1 | 1 | 1 | 1 | 1 | 1 | 1 | 1 | 1 | F | F | F | F |
| 7 | 1 | 1 | 1 | 1 | 1 | 1 | 1 | 1 | 1 | F | F | F | F | F |
| 8 | F | F | F | F | F | F | F | F | F | F | F | F | F | 0 |
| 9 | 1 | 1 | 1 | F | F | F | F | F | F | F | F | F | 0 | 0 |
| 10 | F | 0 | 0 | 0 | 0 | 0 | 0 | 0 | 0 | 0 | 0 | 0 | 0 | 0 |
| 11 | F | F | 0 | 0 | 0 | 0 | 0 | 0 | 0 | 0 | 0 | 0 | 0 | 0 |
| 12 | F | F | F | 0 | 0 | 0 | 0 | 0 | 0 | 0 | 0 | 0 | 0 | 0 |
| 13 | D | D | 1 | 1 | F | F | F | F | F | 0 | 0 | U | U | U |
| 14 | D | D | F | F | F | F | F | F | F | 0 | 0 | U | U | U |
| 15 | D | D | 1 | 1 | F | F | F | F | F | F | F | U | U | U |
| ... | | | | | | | | | | | | | | |

As shown in Table 1, when the indication index (index) is 0, it indicates that all symbols in the slot are of an SBFD OS 1 type. When the indication index (index) is 1, it indicates that all symbols in the slot are of an SBFD OS 2 type. When the indication index (index) is 2, it indicates that all symbols in the slot are of a flexible OS type. When the indication index (index) is 3, 4, 5, 6, or 7, it indicates that the symbols in the slot are of the SBFD OS 2 type and the flexible OS type. When the indication index (index) is 8, 10, 11, or 12, it indicates that the symbols in the slot are of the SBFD OS 1 type and the flexible OS type. When the indication index (index) is 9, it indicates that the symbols in the slot are of the SBFD OS 1 type, the SBFD OS 2 type, and the flexible OS type. When the indication index (index) is 13 or 14, it indicates that the symbols in the slot are of the SBFD OS 1 type, the SBFD OS 2 type, a DL OS type, an UL OS type, and the flexible OS type. When the indication index (index) is 15, it indicates that the symbols in the slot are of the SBFD OS 2 type, the DL OS type, the UL OS type, and the flexible OS type.

The frequency domain position of the SBFD OS is predefined in the protocol, or the higher layer signaling or the physical layer signaling indicates the type of the SBFD OS, so that overheads for indication of the SBFD OS can be reduced, to improve communication performance.

Optionally, the independently configuring the CORESET resource for each type of SBFD time unit among the at least two types of SBFD time units includes one or more of the following:
independently configuring a granularity parameter of a control channel element CCE for each type of SBFD time unit among the at least two types of SBFD time units;
independently configuring, for each type of SBFD time unit among the at least two types of SBFD time units, a time domain resource occupied by a CORESET;
independently configuring, for each type of SBFD time unit among the at least two types of SBFD time units, a frequency domain resource occupied by the CORESET;
independently configuring a mapping parameter of a CCE and a resource element group REG for each type of SBFD time unit among the at least two types of SBFD time units; and
independently configuring a parameter of a demodulation reference signal DMRS resource for each type of SBFD time unit among the at least two types of SBFD time units.

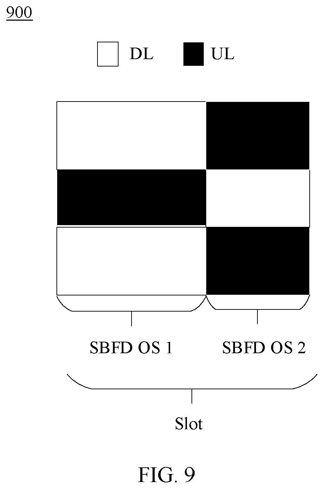

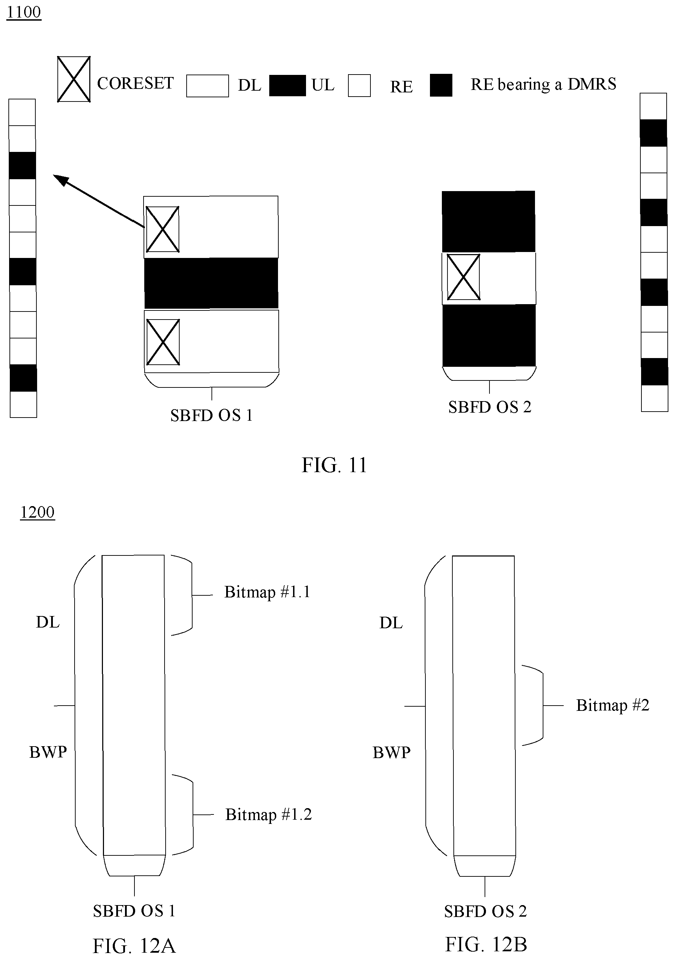

Specific implementations of independently configuring the CORESET resource for each type of SBFD time unit among the at least two types of SBFD time units are described below in detail with reference to FIG. 9 to FIG. 12A and FIG. 12B. Details are not described herein.

Optionally, the independently configuring, for each type of SBFD time unit among the at least two types of SBFD time units, the frequency domain resource occupied by the CORESET includes: independently configuring a first bitmap, where the first bitmap indicates a position of the frequency domain resource occupied by the CORESET. The independently configuring the first bitmap includes one or more of the following:
independently configuring a quantity of first bitmaps for each type of SBFD time unit among the at least two types of SBFD time units;
independently configuring, for each type of SBFD time unit among the at least two types of SBFD time units, a quantity of bits included in the first bitmap;
independently configuring, for each type of SBFD time unit among the at least two types of SBFD time units, a quantity of resource blocks RBs corresponding to each bit included in the first bitmap;
independently configuring, for each type of SBFD time unit among the at least two types of SBFD time units, a frequency domain size that is of the CORESET and that is indicated by the first bitmap; and
independently configuring, for each type of SBFD time unit among the at least two types of SBFD time units, a frequency domain position that is of the CORESET and that is indicated by the first bitmap.

For example, different bitmap parameters are configured for CORESETs for the different types of SBFD OSs. For example, different frequencyDomainResources parameters are configured.

Optionally, a most significant bit in the frequencyDomainResources parameter indicates a bitmap configuration method. For example, 1 indicates that the bitmap indicates an entire DL BWP, that is, the bitmap occupies the entire DL BWP; and 0 indicates that the bitmap indicates consecutive or discrete subbands in the DL BWP.

Optionally, a most significant bit in the frequencyDomainResources parameter indicates a type of a symbol. For example, a bit 1 indicates that the bitmap indicates an SBFD OS 1 type, and a bit 0 indicates that the bitmap indicates an SBFD OS 2 type.

Optionally, a plurality of bits may indicate the foregoing plurality of configurations. For example, the indication bitmap is [1 1 0 1 0 1 0 1 1 0 0 0 0 0 1 1 0 1 0 1 0 1 1 0 0 0 0 0]. In this case, 0 0 indicates that the bitmap indicates consecutive or discrete subbands in a DL BWP and an SBFD OS 2 type, 0 1 indicates that the bitmap indicates consecutive or discrete subbands in the DL BWP and an SBFD OS 1 type, 1 0 indicates that the bitmap indicates the entire DL BWP and the SBFD OS 2 type, and 1 1 indicates that the bitmap indicates the entire DL BWP and the SBFD OS 1 type.

Optionally, a bit length of the bitmap may indicate a configuration manner, and such indication is implicit indication. Specifically, bitmaps of different lengths are mapped to SBFD OSs of different DL frequency domain resources or DL subbands of different DL frequency domain resources.

Optionally, the granularity parameter of the CCE indicates a quantity of resource elements REs included in one CCE, a quantity of RBs included in one CCE, or a quantity of REGs included in one CCE.

For example, a configuration granularity of the CCE is selected based on downlink BWPs or downlink bandwidth occupied by the different types of SBFD OSs, so that downlink frequency domain resources are fully utilized, to avoid a waste of resources.

For example, the independently configuring the mapping parameter of the CCE and the REG for each type of SBFD time unit among the at least two types of SBFD time units includes one or more of the following:
independently configuring a mapping manner of the CCE and the REG for each type of SBFD time unit among the at least two types of SBFD time units, where the mapping parameter of the CCE and the REG indicates the mapping manner of the CCE and the REG, and the mapping manner includes an interleaved mapping manner or a non-interleaved mapping manner;
independently configuring a parameter of a REG bundle for each type of SBFD time unit among the at least two types of SBFD time units, where the parameter of the REG bundle indicates a quantity of REGs included in the REG bundle; and
independently configuring an interleaving size parameter for each type of SBFD time unit among the at least two types of SBFD time units.

According to the foregoing solution, CORESET resources are independently configured for different SBFD time unit types, and quantities of OSs, quantities of CCEs, quantities of RBs, and quantities of REs are separately and independently configured in time domain and frequency domain based on sizes of downlink BWPs or downlink bandwidth occupied by the different types of SBFD time units, so that frequency domain resources of different DL subbands are fully utilized, to reduce PDCCH transmission latency, so as to improve communication performance.

For example, independently configuring the parameter of the DMRS resource includes one or more of the following:
density configured for the DMRS;
a subcarrier position configured for the DMRS; and
a resource mapping manner configured for the DMRS.

For example, when each type of SBFD time unit occupies a large downlink BWP or wide downlink bandwidth, a small quantity of DMRSs are required for demodulation. When each type of SBFD time unit occupies a small downlink BWP or narrow downlink bandwidth, uplink cross-link interference (cross-link interference, CLI) is severe, and more DMRSs are required for demodulation. Therefore, when the DMRS is configured for the CORESET resource for the SBFD time unit, DMRSs may be more densely located. Different DMRS resources are configured for different SBFD OS types, so that demodulation performance can be improved, to improve communication reliability.

Optionally, at least two DMRS resource mapping manners are predefined in a protocol, and different DMRS resource mapping manners are configured by using higher layer signaling for the different types of SBFD time units.

According to the foregoing solution, different CORESET resources are configured for the different types of SBFD time units. Frequency domain resources of downlink subbands of the different types of SBFD time units are different, and therefore different CORESET resources are configured for different downlink frequency domain resources, so that a CORESET resource configuration can support a flexibly changing downlink frequency domain resource, to improve communication performance.

S820: The network device sends second indication information to the terminal device, and correspondingly the terminal device receives the second indication information from the network device, where the second indication information indicates a correspondence between the SBFD time unit and the CORESET resource.

For example, the correspondence between the SBFD time unit and the CORESET resource includes: The correspondence is predefined in a protocol, or higher layer signaling or physical layer signaling indicates the correspondence.

Optionally, the sending the second indication information further includes: sending higher layer signaling or physical layer signaling, where the higher layer signaling or the physical layer signaling carries the second indication information.

For example, the correspondence between the SBFD time unit and the CORESET resource may be explicitly indicated. Specifically, different CORESET resources are configured for the different types of SBFD time units, and the terminal device receives the second indication information, and determines, based on the second indication information, the CORESET resource corresponding to the SBFD time unit. The higher layer signaling or the physical layer signaling indicates the CORESET resources corresponding to the different types of SBFD time units, and the higher layer signaling or the physical layer signaling carries the second indication information. The second indication information may be separately configured or separately indicated, or may be carried in configuration information that is of the CORESET resource and that is configured in the higher layer signaling.

Optionally, the correspondence between the SBFD time unit and the CORESET resource may alternatively be implicitly indicated. Optionally, the correspondence between the SBFD time unit and the CORESET resource may alternatively be implicitly indicated. Specifically, a plurality of CORESET resources are configured in the higher layer signaling. A frequency domain resource, a time domain resource, a granularity parameter of a CCE, a parameter of a DMRS resource, or the like in each CORESET resource configuration implicitly indicates the correspondence between the SBFD time unit and the CORESET resource.

According to the foregoing solution, the terminal device may obtain, based on the correspondence between the SBFD time unit and the CORESET resource, the CORESET resources corresponding to the different types of SBFD time units. In other words, the CORESET resources are independently configured for the different types of SBFD time units, to ensure that a CORESET resource configuration can support a flexibly changing downlink resource. In particular, in comparison with a manner in which CORESET resources are uniformly configured for different types of SBFD time units by using RRC signaling, in this embodiment of this application, control information can be received at any time, to reduce latency, so as to improve communication performance.

S830: The terminal device determines, based on the second indication information, the CORESET resources corresponding to the different types of SBFD time units.

It should be understood that, the determining, based on the second indication information, the CORESET resources corresponding to the different types of SBFD time units includes: determining the CORESET resources corresponding to the different types of SBFD time units based on the correspondence between the SBFD time unit and the CORESET resource, a configuration of a search space, and a CORESET configuration. The correspondence between the SBFD time unit and the CORESET resource may be explicit or implicit. For example, bitmaps of different lengths are mapped to SBFD OSs of different DL frequency domain resources, and a frequency domain resource position of the CORESET may be obtained by using the SBFD OS of the DL frequency domain resource.

Optionally, before step S810, the method 800 further includes step S801.

S801: The terminal device sends third indication information to the network device, and correspondingly the network device receives the third indication information from the terminal device, where the third indication information indicates a capability of the terminal device to support SBFD or support a plurality of SBFD time units.

The network device receives the third indication information sent by the terminal device, and obtains, from the third indication information, a capability of a user to support SBFD. Based on the SBFD capability, the network device can accurately indicate the SBFD time period to the user equipment that can support SBFD. This can improve indication efficiency of the network device, and avoid indicating the SBFD time period to user equipment that does not support SBFD.

With reference to FIG. 9 to FIG. 12A and FIG. 12B, the following describes specific implementations of independently configuring the CORESET resource for each type of SBFD time unit among the at least two types of SBFD time units in step S810.

FIG. 9 is a diagram of an SBFD time period 900 according to an embodiment of this application. As shown in FIG. 9, the SBFD time period 900 includes an SBFD OS 1 type and an SBFD OS 2 type. A white area represents a downlink subband, and a black area represents an uplink subband. The SBFD OS 1 type includes two DL subbands and one UL subband. The SBFD OS 2 type includes one DL subband and two UL subbands. In frequency domain, a downlink BWP or downlink bandwidth of each type of SBFD OS occupies a different quantity of RBs. For example, the SBFD OS 1 type occupies a downlink BWP or downlink bandwidth of 110 RBs, and the SBFD OS 2 type occupies a downlink BWP or downlink bandwidth of 10 RBs. Different CORESET resources are configured for DL subbands of the SBFD OS 1 and the SBFD OS 2. It should be understood that the SBFD may include one or more slots, and each slot includes one or more SBFD OS 1 types and one or more SBFD OS 2 types.

It should be further understood that the SBFD time period 900 is merely an example for description. The white area may alternatively represent an uplink subband, and the black area may alternatively represent a downlink subband. This is not limited in embodiments of this application.

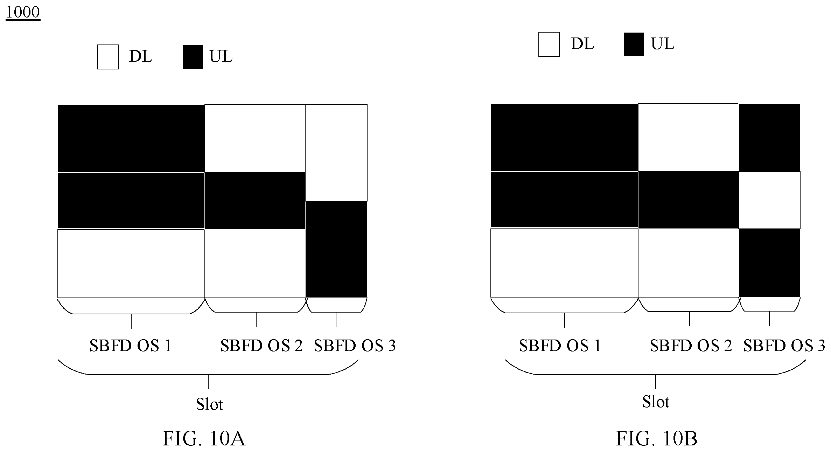

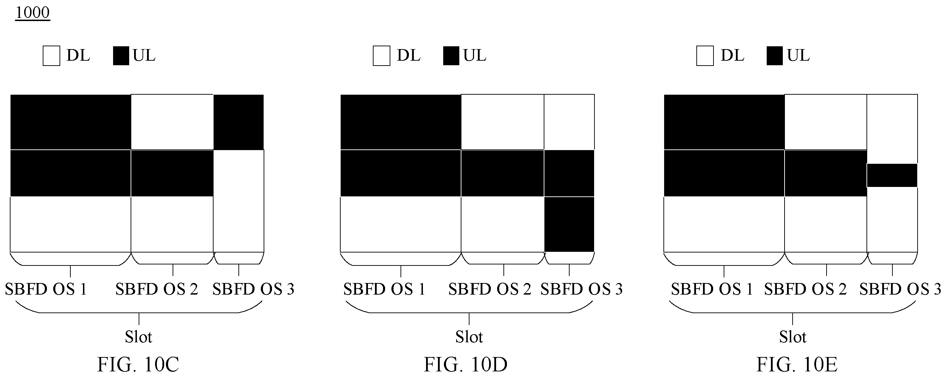

FIG. 10A to FIG. 10E are diagrams of an SBFD time period 1000 according to an embodiment of this application. As shown in FIG. 10A to FIG. 10E, the SBFD time period 1000 includes an SBFD OS 1 type, an SBFD OS 2 type, and an SBFD OS 3 type, and each type of SBFD OS includes a DL subband and a UL subband. It should be understood that the SBFD may include one or more slots, and each slot includes one or more SBFD OS 1 types, one or more SBFD OS 2 types, and one or more SBFD OS 3 types. For example, in FIG. 10A to FIG. 10E, one slot includes at least one SBFD OS 1 type, at least one SBFD OS 2 type, and at least one SBFD OS 3 type, and each type of SBFD OS includes at least one DL subband and at least one UL subband. For example, in FIG. 10A, the SBFD OS 1 type includes two UL subbands and one DL subband, the SBFD OS 2 type includes one UL subband and two DL subbands, and the SBFD OS 3 type includes one UL subband and two DL subbands. It can be learned that a downlink BWP or downlink bandwidth of each type of SBFD OS occupies a different RB. It should be understood that a sequence of the SBFD OS types is not limited in embodiments of this application. In other words, the SBFD OS 2 may be before the SBFD OS 1, and similarly, the SBFD OS 3 may be before the SBFD OS 2.

It should be noted that, in this embodiment of this application, different CORESET resources are configured for different types of SBFD OSs in available downlink frequency domain resources. The available downlink frequency domain resources are frequency domain resources in a downlink bandwidth part (bandwidth part, BWP) that do not include unavailable frequency domain resources or UL frequency domain resources. That the different CORESET resources are configured for the different types of SBFD OSs includes one or more of the following:
(1) Configuration granularities of control channel elements CCEs of the CORESET resources for the different types of SBFD OSs are different.

For example, one CCE includes a plurality of REGs. One REG is one resource block (RB), including 12 resource elements (resource elements, REs) in frequency domain and one OS in time domain. An RB is a smallest resource unit in an NR physical resource.

In this embodiment of this application, the different types of SBFD OSs occupy different downlink BWPs or different downlink bandwidth. Therefore, the configuration granularities of the CCEs are different. The configuration granularities of the CCEs are determined based on the different SBFD OS types, so that downlink frequency domain resources are fully utilized, to avoid a waste of resources.

(2) Time domain positions or frequency domain positions of the CORESET resources for the different types of SBFD OSs are different.

For example, different quantities of OSs or different quantities of mini-slots are configured for the different types of SBFD OSs.

(3) Mapping manners of CCEs and resource element groups REGs of the CORESET resources for the different types of SBFD OSs are different.

It should be understood that one CORESET corresponds to one CCE-to-REG mapping manner. The different mapping manners of the CCEs and the REGs are selected based on the different SBFD OS types. A parameter cce-REG-MappingType indicates the mapping manner of the CCE and the REG, and the mapping manner includes interleaved mapping and non-interleaved mapping. A parameter reg-BundleSize indicates a quantity of REGs included in one REG bundle. A parameter interleaverSize indicates an interleaving size.

(4) Mapping manners of demodulation reference signal DMRS resources of the CORESET resources for the different types of SBFD OSs are different.

For example, the SBFD time period shown in FIG. 9 is used as an example for description. The white area represents a downlink subband, and the black area represents an uplink subband. The SBFD OS 1 type includes two DL subbands and one UL subband, and the SBFD OS 2 type includes one UL subband and two DL subbands. In frequency domain, a downlink BWP or downlink bandwidth occupies 110 RBs. Specifically, the SBFD OS 1 type occupies a downlink BWP or downlink bandwidth of 100 RBs, where the bandwidth is wide, and the SBFD OS 2 type occupies a downlink BWP or downlink bandwidth of 10 RBs, where the bandwidth is narrow.

Optionally, each slot may further include another UL OS, DL OS, or flexible OS (flexible OS, F OS). The F OS is used for uplink and downlink flexible scheduling according to a requirement.

For example, the configuration granularity of the CCE is selected based on downlink BWPs or downlink bandwidth occupied by the different types of SBFD OSs, so that downlink frequency domain resources are fully utilized, to avoid a waste of resources.

For example, a CORESET resource is configured for the SBFD OS 1 type in time domain and frequency domain. The SBFD OS 1 type occupies the downlink BWP or downlink bandwidth of 100 RBs, and each of the two DL subbands of the SBFD OS 1 type occupies 50 RBs. In this case, it is assumed that each CCE includes 6 REGs, that is, 1 CCE=6 REGs. When each DL is configured in a unit of CCEs, 8 CCEs may be configured in frequency domain, and 2 OSs may be configured in time domain. In this case, the CORESET occupies 48 RBs, and no waste of resources is caused. Further, mapping to the CORESET resource may be implemented in a CCE-REG mapping manner of interleaved mapping (interleaved mapping) or non-interleaved mapping (non-interleaved mapping).

In this embodiment of this application, in the non-interleaved mapping manner, a REG bundle size is fixed to 4. In other words, one CCE includes four REGs. In other words, one REG bundle is one CCE, and an index of the REG bundle is the same as an index of the CCE. For example, a bundle 0 includes a REG 0, a REG 1, a REG 2, and a REG 3. In this case, the REG bundle 0 is a CCE 0.

In the interleaved mapping manner, a value L of the REG bundle size is determined by a quantity of OSs of the CORESET, and indexes of REGs in a CCE are arranged in ascending order from 0 in frequency domain. If the CORESET includes a plurality of OSs, the indexes of the REGs in the CCE are arranged in an order of time domain first and then frequency domain. For example, when the REG bundle size is 6 and the CORESET occupies two OSs in time domain, a 1^{st} REG in a REG bundle 0 is on an OS 1, and a 2^{nd} REG is on an OS 2.

In this embodiment of this application, in the interleaved mapping manner, a quantity of REGs in one REG bundle is more flexible, and may be specifically 4, 6, or 7. A correspondence between a CCE index and a REG bundle is determined by an interleaver.

Optionally, at least one CORESET may be configured for a same type of SBFD OS. For example, a CORESET #1 and a CORESET #2 are configured for the SBFD OS 1 type.

Further, a CORESET resource is configured for the SBFD OS 2 type in time domain and frequency domain. The bandwidth of the SBFD OS 2 is narrower. It is assumed that each CCE still includes 6 REGs. In this case, in a DL subband of 10 RBs, only one CCE can be configured, and the CORESET occupies only 6 RBs. This causes a waste of resources and cannot fully utilize resources. Therefore, a configuration of the SBFD OS 2 type is implemented by using a finer granularity. For example, the CORESET is configured in a unit of X1 RB/CCE, where X1 is a positive integer. It is assumed that 1 CCE=4 REGs. When the SBFD OS 2 occupies a DL subband of 10 RBs, X1 may be 2. In other words, 2 CCEs, that is, 8 RBs, may be configured in frequency domain, and 6 or 7 OSs may be configured in time domain.

It should be understood that, for a mapping relationship between the CCE and the REG, interleaved mapping and non-interleaved mapping are still used. When non-interleaved mapping is used, a quantity of REGs in one REG bundle may be equal to 4. When interleaved mapping is used, a quantity of REGs in one REG bundle is more flexible, for example, may be equal to 4, 6, or 7.

Different CORESET resources are configured for different types of SBFD OSs, and quantities of OSs, quantities of CCEs, quantities of RBs, and quantities of REs are separately and independently configured in time domain and frequency domain based on sizes of downlink BWPs or downlink bandwidth occupied by the different types of SBFD OSs, so that frequency domain resources of different DL subbands are fully utilized, to reduce PDCCH transmission latency, so as to improve communication performance.

FIG. 11 is a diagram of an SBFD time period configuration 1100 according to an embodiment of this application. As shown in FIG. 11, mapping manners of DMRS resources of different CORESET resources corresponding to different types of SBFD OSs are different. For example, for the different types of SBFD OSs, density configured for the DMRS resources is different, or for the different types of SBFD OSs, subcarrier positions configured for the DMRS resources are different.

Optionally, a mapping manner of a PDCCH DMRS resource may be predefined in a protocol, and then higher layer signaling indicates DMRS configurations of different SBFD OS types.

For example, the mapping manner of the DMRS resource is specifically as follows. Each REG includes 12 REs on one OS. One PDCCH is limited to one CORESET, and is transmitted by using a demodulation reference signal (DMRS) of the PDCCH. For example, a DMRS sequence is generated by using a gold sequence. Generation of a DMRS sequence of an *l* ^{th} OS of the PDCCH may be represented by Formula (1): ${r}_{l} \left(m\right) = \frac{1}{\sqrt{2}} \left(1-2⋅c\left(2m\right)\right) + j \frac{1}{\sqrt{2}} \left(1-2⋅c\left(2m+1\right)\right)$

The pseudo-random sequence *c*(*m*) may be a gold sequence whose sequence length is 31. For a sequence *c*(*m*) whose output length is *M_{PN}*, where *n* = 0, 1, ..., *M_{PN}* -1, the sequence may be determined according to Formula (2): $\begin{matrix}c \left(m\right) = \left({x}_{1}\left(m+{N}_{c}\right)+{x}_{2}\left(m+{N}_{c}\right)\right) mod 2 \\ {x}_{1} \left(m+31\right) = \left({x}_{1}\left(m+3\right)+{x}_{1}\left(m\right)\right) mod 2 \\ {x}_{2} \left(m+31\right) = \left({x}_{2}\left(m+3\right)+{x}_{2}\left(m+2\right)+{x}_{2}\left(m+1\right)+{x}_{2}\left(m\right)\right) mod 2\end{matrix}$

*N* =1600, a 1^{st} m-sequence *x*₁(*m*) may be initialized to *x*₁(0) = 1, *x*₁(*n*) = 0, *n* = 1, 2, ..., 30 , a 2^{nd} m-sequence *x*₂(*m*) may be initialized by using a parameter *cᵢₙᵢₜ*, and *cᵢₙᵢₜ* may be determined according to Formula (3): ${c}_{init} = \left({2}^{17}\left({N}_{symb}^{slot}{n}_{s , f}^{μ}+l+1\right)\left(2{N}_{ID}+1\right)+2{N}_{ID}\right) {mod 2}^{31}$

*l* represents an index value of an OFDM symbol in a slot. ${N}_{symb}^{slot}$ is a quantity of symbols included in a slot. ${n}_{s , f}^{μ}$ is a slot index in a system frame. *N_{ID}* is an initialization parameter, and a value may be 0 or 1.

A DMRS sequence corresponding to a DMRS port may be mapped to a corresponding time-frequency resource according to a preset time-frequency resource mapping rule. For an antenna port p (corresponding to a DMRS port p), an *m^{th}* sequence element *rₗ*(*m*) in a corresponding DMRS sequence may be mapped, according to a mapping rule shown in Formula (4), to an RE whose index is (*k,l*)*_{p,µ}.* $\begin{matrix}{a}_{k , j}^{\left(p, μ\right)} = {β}_{DMRS}^{PDCCH} ⋅ {r}_{j} \left(3n+k′\right) \\ k = {nN}_{SC}^{RB} + 4 k ′ + 1 \\ k ′ = 0 , 1 , 2 \\ n = 0 , 1 , …\end{matrix}$

The RE whose index is (*k,l*)*_{p,µ}* corresponds to an OFDM symbol whose index is *l* in a slot in time domain, and corresponds to a subcarrier whose index is *k* in frequency domain.

It should be noted that, an SBFD OS 2 type occupies a small downlink BWP or narrow downlink bandwidth, uplink cross-link interference (cross-link interference, CLI) is severe, and more DMRSs are required for demodulation. Therefore, when a DMRS is configured for a CORESET resource for the SBFD OS 2 type, DMRSs may be more densely located. In this case, mapping to the RE whose index is (*k,l*)*_{p,µ}* may be performed according to a mapping rule shown in Formula (5): $\begin{matrix}{a}_{k , j}^{\left(p, μ\right)} = {β}_{DMRS}^{PDCCH} ⋅ {r}_{j} \left(3n+k′\right) \\ k = {nN}_{SC}^{RB} + 3 k ′ + 1 \\ k ′ = 0 , 1 , 2 , 3 \\ n = 0 , 1 , …\end{matrix}$

Specifically, with reference to FIG. 11, DMRS subcarriers of an SBFD OS 1 type are located on a 1^{st} RE, a 5^{th} RE, and a 9^{th} RE in the 12 REs. It can be learned that the DMRS of the PDCCH occurs once every four REs on each OS, and in this case, overheads for configuring the DMRS are 3/12. DMRS subcarriers of the SBFD OS 2 type are located on a 1^{st} RE, a 4^{th} RE, a 7^{th} RE, and a 10^{th} RE in the 12 REs. It can be learned that the DMRS of the PDCCH occurs once every three REs on each OS, and in this case, overheads for configuring the DMRS are 4/12. In comparison with the SBFD OS 1, DMRSs configured for the SBFD OS 2 type are denser. Different DMRS resources are configured for different SBFD OS types, so that demodulation performance can be improved, to improve communication reliability.

Further, different bitmaps are configured for the different types of SBFD OSs, and the bitmap indicates a frequency domain position of the CORESET.

FIG. 12A and FIG. 12B are a diagram of an SBFD time period configuration 1200 according to an embodiment of this application. As shown in FIG. 12A and FIG. 12B, different bitmaps (Bitmap) are configured for different types of SBFD OSs, and the bitmap indicates a frequency domain position of a CORESET. A parameter frequencyDomainResources indicates frequency domain bandwidth occupied by the CORESET. There are 45 bits in total, each bit indicates six RB resources, and a bit 1 indicates a frequency domain position allocated to the CORESET. For example, a parameter frequencyDomainResources1 indicates a frequency domain position of a CORESET configured for an SBFD OS 2 type, and a parameter frequencyDomainResources2 indicates a frequency domain position of a CORESET configured for an SBFD OS 2 type.

For example, for a bitmap configuration of the SBFD OS 1 type, a bitmap may indicate a frequency domain position only in an available downlink frequency domain resource, and one downlink (DL) BWP includes one or more bitmaps. For example, one downlink subband of the SBFD OS 1 type occupies 50 RBs. When one bitmap is configured in the DL BWP, because 1 bit indicates six RBs and the SBFD OS 1 type occupies 48 RB resources in frequency domain, frequencyDomainResources is set to {11111111000...}. In other words, 48 RBs starting from a start position are occupied.

Optionally, a bitmap may be independently configured for a same type of SBFD OS. For example, a bitmap #1 and a bitmap #2 are independently configured for the SBFD OS 1 type, or a bitmap #1.1 and a bitmap #1.2 may be jointly configured. As shown in FIG. 12A, a bitmap #1.1 and a bitmap #1.2 are configured in a downlink BWP of the SBFD OS 1 type. As shown in FIG. 12B, a bitmap #2 is configured in a downlink BWP of the SBFD OS 2 type.

For example, that a bitmap #1 and a bitmap #2 are separately configured for the SBFD OS 1 type and the SBFD OS 2 type includes one or more of the following:
(1) Different types of SBFD OSs correspond to different quantities of bitmaps.
(2) Bitmaps corresponding to different types of SBFD OSs include different quantities of bits.
(3) Each bit included in bitmaps corresponding to different types of SBFD OSs corresponds to a different quantity of resource blocks RBs. For example, 1 bit may indicate 2, 3, 4, 5, or 6 RBs.
   For example, when 1 bit indicates six RBs, using the SBFD OS 1 type as an example, when a downlink BWP of the SBFD OS 1 type occupies 50 RBs, six RBs are used as one group, eight RB groups may be occupied, and a start position of the bitmap starts from a 1^{st} RB group of the BWP.
(4) Bitmaps corresponding to different types of SBFD OSs indicate different frequency domain sizes of CORESETs.
(5) Bitmaps corresponding to different types of SBFD OSs indicate different frequency domain positions. For example, each bitmap has a different start position and a different contiguous frequency domain length. The start position of the bitmap may start from a 1^{st} RB group of a downlink BWP.

Different bitmaps are configured for different SBFD OS types. For example, the bitmap #1 is configured for the SBFD OS 1 type, and the bitmap #2 is configured for the SBFD OS 2 type. In this way, the different bitmaps can indicate different frequency domain positions of CORESETs, so that overheads consumed when the bitmaps indicate the frequency domain positions of the CORESETs can be reduced. In addition, frequency domain resources are constantly changing, and setting different bitmaps for different frequency domain resources can adapt to the different frequency domain resources. Therefore, the method in which the different bitmaps are configured for the different SBFD OS types to indicate the frequency domain positions of the CORESETs can reduce overheads for indication of the bitmaps, to improve communication performance.

According to the foregoing solution, the indicated SBFD time period includes the at least two types of SBFD time units, and each type of SBFD time unit includes the uplink subband and the downlink subband. The CORESET resources are independently configured for the different types of SBFD time units. In this way, each SBFD time unit has a downlink resource. This can ensure that user equipment can receive downlink information at any time, for example, downlink transmission data and downlink control information, and ensure that a CORESET resource configuration can support a flexibly changing downlink resource, so that latency can be reduced, to improve communication performance.

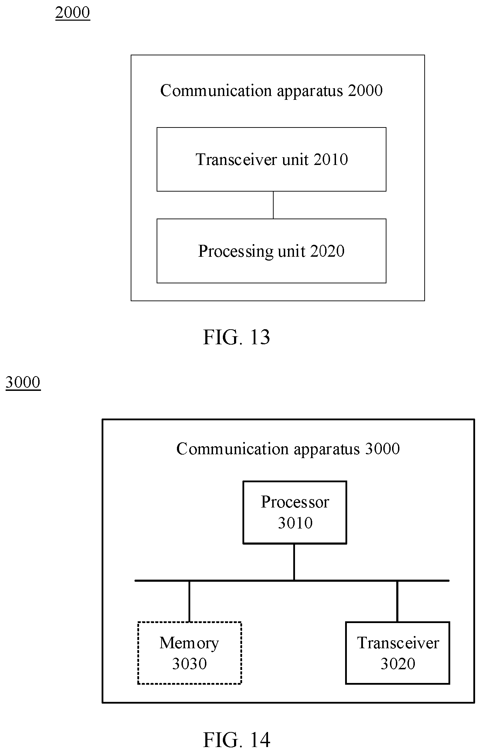

FIG. 13 is a block diagram of a communication apparatus 2000 according to an embodiment of this application. As shown in FIG. 13, the communication apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a transceiver unit. The processing unit 2020 may be configured to perform processing.

Optionally, the communication apparatus 2000 may further include a storage unit. The storage unit may be configured to store instructions and/or data, and the processing unit 2020 may read the instructions and/or the data in the storage unit, so that the apparatus implements the foregoing method embodiments.

For example, the communication apparatus 2000 may be a network device, or may be a communication apparatus, for example, a chip, a chip system, or a circuit, that is used in the network device or used together with the network device and that can implement a method performed by the network device. For details, refer to related descriptions of the chip system shown in the following figure.

For example, the communication apparatus 2000 may be a terminal device, or may be a communication apparatus, for example, a chip, a chip system, or a circuit, that is used in the terminal device or used together with the terminal device and that can implement a method performed by the terminal device. For details, refer to related descriptions of the chip system shown in the following figure.

In a possible design, the communication apparatus 2000 may implement the steps or procedures performed by the network device in the foregoing method embodiments. The processing unit 2020 is configured to perform a processing-related operation of the network device in the foregoing method embodiments. The transceiver unit 2010 is configured to perform a sending/receiving-related operation of the network device in the foregoing method embodiments.

For example, the transceiver unit 2010 is configured to send first indication information, where the first indication information indicates at least one SBFD time period; and the processing unit 2020 is configured to independently configure a CORESET resource for each type of SBFD time unit in at least two types of SBFD time units.

For example, the transceiver unit 2010 is further configured to send second indication information, where the second indication information indicates a correspondence between the SBFD time unit and the CORESET resource. The transceiver unit 2010 is further configured to receive third indication information from a terminal device, where the third indication information indicates a capability of the terminal device to support SBFD or support a plurality of SBFD time units.

In another possible design, the communication apparatus 2000 may implement the steps or procedures performed by the terminal device in the foregoing method embodiments. The transceiver unit 2010 is configured to perform a sending/receiving-related operation of the terminal device in the foregoing method embodiments. The processing unit 2020 is configured to perform a processing-related operation of the terminal device in the foregoing method embodiments.

For example, the transceiver unit 2010 is configured to send third indication information, where the third indication information indicates a capability of the terminal device to support SBFD or support a plurality of SBFD time units; and the transceiver unit 2010 is further configured to receive first indication information from a network device, where the first indication information indicates at least one SBFD time period.

For example, the transceiver unit 2010 is further configured to receive second indication information from the network device, where the second indication information indicates a correspondence between an SBFD time unit and a CORESET resource.

For example, the processing unit 2020 is configured to determine, based on the second indication information, CORESET resources corresponding to different types of SBFD time units. The following is included: The CORESET resources corresponding to the different types of SBFD time units are determined based on the correspondence between the SBFD time unit and the CORESET resource, a configuration of a search space, and a CORESET configuration. A correspondence between the SBFD time unit and the CORESET configuration may be explicit or implicit. For example, bitmaps of different lengths are mapped to SBFD OSs of different DL frequency domain resources, and a frequency domain resource position of the CORESET may be obtained by using the SBFD time unit of the DL frequency domain resource.

It should be understood that the device 2000 herein is implemented in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the device 2000 may be specifically the transmit end in the foregoing embodiments, and may be configured to perform the procedures and/or steps corresponding to the transmit end in the foregoing method embodiments. Alternatively, the device 2000 may be specifically the receive end in the foregoing embodiments, and may be configured to perform the procedures and/or steps corresponding to the receive end in the foregoing method embodiments. To avoid repetition, details are not described herein again.

The device 2000 in the foregoing solutions has a function of implementing corresponding steps performed by the transmit end in the foregoing method. Alternatively, the device 2000 in the foregoing solutions has a function of implementing corresponding steps performed by the receive end in the foregoing method. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform sending and receiving operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the communication apparatus may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a block diagram of a communication apparatus 3000 according to an embodiment of this application. As shown in FIG. 14, the communication apparatus 3000 includes a processor 3010 and a transceiver 3020. The processor 3010 and the transceiver 3020 communicate with each other through an internal connection path. The processor 3010 is configured to execute instructions, to control the transceiver 3020 to send a signal and/or receive a signal.

Optionally, the communication apparatus 3000 may further include a memory 3030. The memory 3030 communicates with the processor 3010 and the transceiver 3020 through an internal connection path. The memory 3030 is configured to store instructions. The processor 3010 may execute the instructions stored in the memory 3030.

For example, the communication apparatus 3000 may be a network device, or may be a communication apparatus, for example, a chip, a chip system, or a circuit, that is used in the network device or used together with the network device and that can implement a method performed by a location management function network element.

For example, the communication apparatus 3000 may be a terminal device, or may be a communication apparatus, for example, a chip, a chip system, or a circuit, that is used in the terminal device or used together with the terminal device and that can implement a method performed by the terminal device.

In a possible implementation, the apparatus 3000 is configured to implement the procedures and steps corresponding to the network device in the foregoing method embodiments.

In another possible implementation, the apparatus 3000 is configured to implement the procedures and steps corresponding to the terminal device in the foregoing method embodiments.

Optionally, the memory 3030 may include a read-only memory and a random access memory, and provide instructions and data to the processor. A part of the memory may further include a non-volatile random access memory. For example, the memory may further store information of a device type. The processor 3010 may be configured to execute the instructions stored in the memory. When the processor 3010 executes the instructions stored in the memory, the processor 3010 is configured to perform the steps and/or procedures corresponding to the transmit end or the receive end in the foregoing method embodiments.

In an implementation process, the steps of the foregoing method may be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or a transistor logic device, a discrete hardware component, the foregoing CPU, another general-purpose processor, a DSP, an ASIC, an FGPA or another coding-capable logic device, or a partial circuit used for a processing function in another chip. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a non-volatile memory, or may include both a volatile memory and a non-volatile memory. It should be noted that the memory in the system and method described in the specification includes but is not limited to these memories and any memory of another proper type.

In embodiments of this application, the foregoing method may be performed by a network device and a terminal device, or may be performed by chips, chip systems, or circuits of the network device and the terminal device. The chips, the chip systems, or the circuits may be installed in the network device and the terminal device.

An embodiment of this application further provides a computer-readable storage medium. The computer-readable storage medium stores computer instructions used to implement the method performed by the network device or the terminal device in the foregoing method embodiments.

An embodiment of this application further provides a computer program product, including instructions. When the instructions are executed by a computer, the method performed by the network device or the terminal device in the foregoing method embodiments is implemented.

An embodiment of this application further provides a communication system. The communication system includes the network device or the terminal device in the foregoing embodiments.

For explanations and beneficial effects of related content in any one of the apparatuses provided above, refer to corresponding method embodiments provided above. Details are not described herein again.

For ease of understanding the foregoing embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "indicating" may include directly indicating and indirectly indicating. When a piece of indication information indicates A, the indication information may directly indicate A or indirectly indicate A, but it does not indicate that the indication information definitely carries A.
   Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. A specific sending method is not limited in this application.
(3) In this application, a "protocol" may be a standard protocol in the communication field, for example, may include a 5G protocol, a new radio (new radio, NR) protocol, and a related protocol applied to a future communication system. This is not limited in this application. "Predefinition" may include advance definition, for example, definition in a protocol. "Preconfiguration" may be implemented by pre-storing corresponding code or a corresponding table in a device, or may be implemented in another manner of indicating related information. A specific implementation thereof is not limited in this application.
(4) In this application, a configuration may be a signaling configuration, or may be described as configuration signaling. For example, the signaling configuration is configured by using signaling sent by a base station, where the signaling may be a radio resource control (radio resource control, RRC) message, downlink control information (downlink control information, DCI), or a system information block (system information block, SIB). Optionally, the signaling configuration may alternatively be configured for a terminal device by using preconfigured signaling, or may be configured for a terminal device in a preconfiguration manner. The preconfiguration herein is to define or configure a value of a corresponding parameter in advance in a protocol manner, and store the value in the terminal device during communication with the terminal device. A preconfigured message may be modified or updated when the terminal device is connected to a network.
(5) In this application, "communication" may be described as "data transmission", "information transmission", "data processing", or the like, and "transmission" includes "sending" and "receiving".

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information, wherein the first indication information indicates at least one subband full duplex SBFD time period, the SBFD time period comprises at least two types of SBFD time units, each type of SBFD time unit comprises an uplink subband and a downlink subband, and different types of SBFD time units have different subband configurations; and
independently configuring a control resource set CORESET resource for each type of SBFD time unit among the at least two types of SBFD time units.

2. The method according to claim 1, further comprising:
sending second indication information, wherein the second indication information indicates a correspondence between the SBFD time unit and the CORESET resource.

3. The method according to claim 2, wherein the sending the second indication information comprises: sending higher layer signaling or physical layer signaling, wherein the higher layer signaling or the physical layer signaling carries the second indication information.

4. The method according to claim 1, wherein that the different types of SBFD time units have the different subband configurations comprises one or more of the following:
the uplink subbands have different frequency domain sizes and/or different frequency domain positions; or
the downlink subbands have different frequency domain sizes and/or different frequency domain positions.

5. The method according to any one of claims 1 to 4, wherein the at least two types of SBFD time units are predefined in a protocol, and definition information of each type of SBFD time unit comprises one or more of the following:
a frequency domain start position or a frequency domain end position of a subband;
a frequency domain size of a subband; and
an uplink transmission configuration, a downlink transmission configuration, a full duplex transmission configuration, or a flexible transmission configuration of a subband.

6. The method according to claim 1 or 5, wherein the first indication information further indicates a type of the SBFD time unit.

7. The method according to claim 1, wherein the independently configuring the CORESET resource for each type of SBFD time unit among the at least two types of SBFD time units comprises one or more of the following:
independently configuring a granularity parameter of a control channel element CCE for each type of SBFD time unit among the at least two types of SBFD time units;
independently configuring, for each type of SBFD time unit among the at least two types of SBFD time units, a time domain resource occupied by a CORESET;
independently configuring, for each type of SBFD time unit among the at least two types of SBFD time units, a frequency domain resource occupied by the CORESET;
independently configuring a mapping parameter of a CCE and a resource element group REG for each type of SBFD time unit among the at least two types of SBFD time units; and
independently configuring a parameter of a demodulation reference signal DMRS resource for each type of SBFD time unit among the at least two types of SBFD time units.

8. The method according to claim 7, wherein the independently configuring, for each type of SBFD time unit among the at least two types of SBFD time units, the frequency domain resource occupied by the CORESET comprises: independently configuring a first bitmap, wherein the first bitmap indicates a position of the frequency domain resource occupied by the CORESET; and
the independently configuring the first bitmap comprises one or more of the following:
independently configuring a quantity of first bitmaps for each type of SBFD time unit among the at least two types of SBFD time units;
independently configuring, for each type of SBFD time unit among the at least two types of SBFD time units, a quantity of bits comprised in the first bitmap;
independently configuring, for each type of SBFD time unit among the at least two types of SBFD time units, a quantity of resource blocks RBs corresponding to each bit comprised in the first bitmap;
independently configuring, for each type of SBFD time unit among the at least two types of SBFD time units, a frequency domain size that is of the CORESET and that is indicated by the first bitmap; and
independently configuring, for each type of SBFD time unit among the at least two types of SBFD time units, a frequency domain position that is of the CORESET and that is indicated by the first bitmap.

9. The method according to claim 7, wherein the granularity parameter of the CCE indicates a quantity of resource elements REs comprised in one CCE, a quantity of RBs comprised in one CCE, a quantity of REGs comprised in one CCE, or a frequency domain size comprised in one CCE.

10. The method according to claim 7, wherein the independently configuring the mapping parameter of the CCE and the REG for the at least two types of SBFD time units comprises one or more of the following:
independently configuring a mapping manner of the CCE and the REG for the at least two types of SBFD time units, wherein
the mapping parameter of the CCE and the REG indicates the mapping manner of the CCE and the REG, and the mapping manner comprises an interleaved mapping manner or a non-interleaved mapping manner;
independently configuring a parameter of a REG bundle for the at least two types of SBFD time units, wherein the parameter of the REG bundle indicates a quantity of REGs comprised in the REG bundle; and
independently configuring an interleaving size parameter for the at least two types of SBFD time units.

11. The method according to claim 7, wherein independently configuring the parameter of the DMRS resource comprises one or more of the following:
density configured for the DMRS;
a subcarrier position configured for the DMRS; and
a resource mapping manner configured for the DMRS.

12. The method according to claim 6 or 11, wherein resource mapping manners of DMRSs for the at least two types of SBFD time units are predefined in a protocol.

13. The method according to any one of claims 1 to 12, wherein before sending the first indication information, the method further comprises:
receiving third indication information from a terminal device, wherein the third indication information indicates a capability of the terminal device to support SBFD or support a plurality of SBFD time units.

14. A communication method, comprising:
sending first indication information, wherein the first indication information indicates a subband full duplex SBFD time period, the SBFD time period comprises a first SBFD time unit of a first type and a second SBFD time unit of a second type, the first SBFD time unit comprises a first uplink subband and a first downlink subband, the second SBFD time unit comprises a second uplink subband and a second downlink subband, and a first subband configuration of the first SBFD time unit is different from a second subband configuration of the second SBFD time unit; and
configuring a first control resource set CORESET resource for the first SBFD time unit, and configuring a second CORESET resource for the second SBFD time unit.

15. The method according to claim 14, further comprising: sending second indication information, wherein
the second indication information indicates a correspondence between the first SBFD time unit and the first CORESET resource, and/or the second indication information indicates a correspondence between the second SBFD time unit and the second CORESET resource.

16. The method according to claim 15, wherein the second indication information is carried by higher layer signaling or physical layer signaling.

17. The method according to any one of claims 14 to 16, wherein that the first subband configuration is different from the second subband configuration comprises one or more of the following:
a frequency domain size of the uplink subband of the first SBFD time unit is different from a frequency domain size of the uplink subband of the second SBFD time unit; and/or
a frequency domain position of the uplink subband of the first SBFD time unit is different from a frequency domain position of the uplink subband of the second SBFD time unit; and/or
a frequency domain size of the downlink subband of the first SBFD time unit is different from a frequency domain size of the downlink subband of the second SBFD time unit; and/or
a frequency domain position of the downlink subband of the first SBFD time unit is different from a frequency domain position of the downlink subband of the second SBFD time unit.

18. The method according to any one of claims 14 to 17, wherein the first SBFD time unit and/or the second SBFD time unit are/is predefined in a protocol.

19. The method according to any one of claims 14 to 18, wherein definition information of the first SBFD time unit and/or definition information of the first SBFD time unit comprise/comprises one or more of the following:
a frequency domain start position or a frequency domain end position of a subband;
a frequency domain size of a subband; and
an uplink transmission configuration, a downlink transmission configuration, a full duplex transmission configuration, or a flexible transmission configuration of a subband.

20. The method according to any one of claims 14 to 19, wherein the first indication information further indicates the first type and/or the second type.

21. The method according to any one of claims 14 to 20, wherein configuring the first CORESET resource for the first SBFD time unit comprises one or more of the following:
configuring a granularity parameter of a first control channel element CCE for the first SBFD time unit;
configuring, for the first SBFD time unit, a first time domain resource occupied by the first CORESET;
configuring, for the first SBFD time unit, a first frequency domain resource occupied by the first CORESET;
configuring a first mapping parameter of a CCE and a resource element group REG for the first SBFD time unit; and
configuring a parameter of a first demodulation reference signal DMRS resource for the first SBFD time unit.

22. The method according to claim 21, wherein the configuring, for the first SBFD time unit, the first frequency domain resource occupied by the first CORESET comprises: configuring a first bitmap, wherein the first bitmap indicates a position of the first frequency domain resource occupied by the first CORESET.

23. The method according to claim 22, wherein the configuring the first bitmap comprises one or more of the following:
configuring a quantity of first bitmaps for the first SBFD time unit;
configuring, for the first SBFD time unit, a quantity of bits comprised in the first bitmap;
configuring, for the first SBFD time unit, a quantity of resource blocks RBs corresponding to each bit comprised in the first bitmap;
configuring, for the first SBFD time unit, a frequency domain size that is of the first CORESET and that is indicated by the first bitmap; and
configuring, for the first SBFD time unit, a frequency domain position that is of the first CORESET and that is indicated by the first bitmap.

24. The method according to claim 21, wherein the granularity parameter of the first CCE indicates a quantity of resource elements REs comprised in one CCE, a quantity of RBs comprised in one CCE, a quantity of REGs comprised in one CCE, or a frequency domain size comprised in one CCE.

25. The method according to claim 21, wherein the first mapping parameter comprises:
a first mapping manner that is of the CCE and the REG and that is configured for the first SBFD time unit; and/or
a first parameter that is of a REG bundle and that is configured for the first SBFD time unit; and/or
a first interleaving size parameter configured for the first SBFD time unit.

26. The method according to claim 25, wherein the first mapping manner comprises an interleaved mapping manner or a non-interleaved mapping manner.

27. The method according to claim 25 or 26, wherein the parameter of the REG bundle indicates a quantity of REGs comprised in the REG bundle.

28. The method according to any one of claims 21 to 27, wherein the parameter of the first DMRS resource comprises one or more of the following:
density configured for the first DMRS;
a subcarrier position configured for the first DMRS; and
a resource mapping manner configured for the first DMRS.

29. The method according to claim 21 or 28, wherein the resource mapping manner of the first DMRS is predefined in a protocol.

30. The method according to any one of claims 14 to 29, further comprising:
receiving third indication information from a terminal device, wherein the third indication information indicates a capability of the terminal device to support SBFD or support a plurality of SBFD time units.

31. A communication method, comprising:
receiving first indication information from a network device, wherein the first indication information indicates at least one subband full duplex SBFD slot, the SBFD slot comprises at least two types of SBFD time units, and each type of SBFD time unit comprises an uplink subband and a downlink subband; and
different types of SBFD time units have different subband configurations; and
independently configuring a control resource set CORESET resource for each type of SBFD time unit among the at least two types of SBFD time units.

32. The method according to claim 31, further comprising:
receiving second indication information, wherein the second indication information indicates a correspondence between the SBFD time unit and the CORESET resource.

33. The method according to claim 32, wherein receiving the second indication information further comprises: receiving higher layer signaling or physical layer signaling, wherein the higher layer signaling or the physical layer signaling carries the second indication information.

34. The method according to claim 31, wherein that the different types of SBFD time units have the different subband configurations comprises one or more of the following:
the uplink subbands have different frequency domain sizes and/or different frequency domain positions; or
the downlink subbands have different frequency domain sizes and/or different frequency domain positions.

35. The method according to any one of claims 31 to 34, further comprising:
the at least two types of SBFD time units are predefined in a protocol, and definition information of each type of SBFD time unit comprises one or more of the following:
a frequency domain start position or a frequency domain end position of a subband;
a frequency domain size of a subband; and
an uplink transmission configuration, a downlink transmission configuration, a full duplex transmission configuration, or a flexible transmission configuration of a subband.

36. The method according to claim 31 or 35, wherein the first indication information further indicates a type of the SBFD OS.

37. The method according to claim 31, wherein the independently configuring the CORESET resource for each type of SBFD time unit among the at least two types of SBFD time units comprises one or more of the following:
independently configuring a granularity parameter of a control channel element CCE for each type of SBFD time unit among the at least two types of SBFD time units;
independently configuring, for each type of SBFD time unit among the at least two types of SBFD time units, a time domain resource occupied by a CORESET;
independently configuring, for each type of SBFD time unit among the at least two types of SBFD time units, a frequency domain resource occupied by the CORESET;
independently configuring a mapping parameter of a CCE and a resource element group REG for each type of SBFD time unit among the at least two types of SBFD time units; and
independently configuring a parameter of a demodulation reference signal DMRS resource for each type of SBFD time unit among the at least two types of SBFD time units.

38. The method according to any one of claims 32 to 37, further comprising: determining, based on the second indication information, CORESET resources corresponding to the different types of SBFD time units.

39. The method according to any one of claims 31 to 38, wherein before receiving the first indication information, the method further comprises:
sending third indication information to the network device, wherein the third indication information indicates a capability of a terminal device to support SBFD or support a plurality of SBFD time units.

40. A communication method, comprising:
receiving first indication information, wherein the first indication information indicates a subband full duplex SBFD slot, the SBFD slot comprises a first SBFD time unit of a first type and a second SBFD time unit of a second type, the first SBFD time unit comprises a first uplink subband and a first downlink subband, the second SBFD time unit comprises a second uplink subband and a second downlink subband, and a first subband configuration of the first SBFD time unit is different from a second subband configuration of the second SBFD time unit; and
configuring a first control resource set CORESET resource for the first SBFD time unit, and configuring a second CORESET resource for the second SBFD time unit.

41. The method according to claim 40, further comprising: receiving second indication information, wherein
the second indication information indicates:
a correspondence between the first SBFD time unit and the first CORESET resource; and/or
a correspondence between the second SBFD time unit and the second CORESET resource.

42. The method according to claim 41, wherein the second indication information is carried by higher layer signaling or physical layer signaling.

43. The method according to any one of claims 40 to 42, wherein that the first subband configuration is different from the second subband configuration comprises one or more of the following:
a frequency domain size of the uplink subband of the first SBFD time unit is different from a frequency domain size of the uplink subband of the second SBFD time unit; and/or
a frequency domain position of the uplink subband of the first SBFD time unit is different from a frequency domain position of the uplink subband of the second SBFD time unit; and/or
a frequency domain size of the downlink subband of the first SBFD time unit is different from a frequency domain size of the downlink subband of the second SBFD time unit; and/or
a frequency domain position of the downlink subband of the first SBFD time unit is different from a frequency domain position of the downlink subband of the second SBFD time unit.

44. The method according to any one of claims 40 to 43, wherein the first SBFD time unit and/or the second SBFD time unit are/is predefined in a protocol.

45. The method according to any one of claims 40 to 44, wherein definition information of the first SBFD time unit and/or definition information of the first SBFD time unit comprise/comprises one or more of the following:
a frequency domain start position or a frequency domain end position of a subband;
a frequency domain size of a subband; and
an uplink transmission configuration, a downlink transmission configuration, a full duplex transmission configuration, or a flexible transmission configuration of a subband.

46. The method according to any one of claims 40 to 45, wherein the first indication information further indicates the first type and/or the second type.

47. The method according to any one of claims 40 to 46, wherein configuring the first CORESET resource for the first SBFD time unit comprises one or more of the following:
configuring a granularity parameter of a first control channel element CCE for the first SBFD time unit;
configuring, for the first SBFD time unit, a first time domain resource occupied by the first CORESET;
configuring, for the first SBFD time unit, a first frequency domain resource occupied by the first CORESET;
configuring a first mapping parameter of a CCE and a resource element group REG for the first SBFD time unit; and
configuring a parameter of a first demodulation reference signal DMRS resource for the first SBFD time unit.

48. The method according to any one of claims 41 to 47, further comprising: determining, based on the second indication information, the first CORESET resource corresponding to the first type.

49. The method according to any one of claims 40 to 48, further comprising:
sending third indication information to a network device, wherein the third indication information indicates a capability of a terminal device to support SBFD or support a plurality of SBFD time units.

50. A communication apparatus, comprising a processor, wherein the processor is coupled to a memory, and the processor is configured to execute computer program instructions stored in the memory, to cause the apparatus to perform the method according to any one of claims 1 to 30, or cause the apparatus to perform the method according to any one of claims 31 to 49.

51. A communication system, comprising a network device and a terminal device, wherein the network device is configured to perform the method according to any one of claims 1 to 30, and the terminal device is configured to perform the method according to any one of claims 31 to 49.

52. A computer-readable storage medium, wherein the computer-readable storage medium stores computer program instructions, and when the computer program instructions are run on a computer, the computer is caused to perform the method according to any one of claims 1 to 30, or the computer is caused to perform the method according to any one of claims 31 to 49.

53. A computer program product, comprising computer program instructions, wherein when the computer program instructions are run on a computer, the computer is caused to perform the method according to any one of claims 1 to 49.
